# EUROPÄISCHE PATENTSCHRIFT

(11) **EP 1 935 704 B1**
(45) Veröffentlichungstag und Bekanntmachung des Hinweises auf die Patenterteilung: **06.06.2012**
(21) Anmeldenummer: 07022844.0
(22) Anmeldetag: 26.11.2007
(51) Int. Cl.: B60K 37/06, B60K 35/00, G06F 3/033

(54) **Anzeige- und Bedienvorrichtung in einem Kraftfahrzeug mit von einer Position einer Bedienhand abhängig eingeblendeten Menüs**
Display and operating device in a motor vehicle with a superimposed menu dependent on the position of a hand used for operating
Dispositif d'affichage et de commande dans un véhicule automobile doté de menus apparaissant en fonction de la position d'une main de commande

(30) Priorität: 21.12.2006 DE 102006061778
(43) Veröffentlichungstag der Anmeldung: 25.06.2008
(73) Patentinhaber: Volkswagen Aktiengesellschaft, 38436 Wolfsburg (DE)
(72) Erfinder: Wäller, Christoph, 38102 Braunschweig (DE); Bachfischer, Katharina, 38440 Wolfsburg (DE); Thom, Mathias, 38106 Braunschweig (DE)

(56) Entgegenhaltungen:
- EP-A- 1 406 160
- DE-A1- 4 001 062
- DE-A1- 4 121 180
- DE-A1- 10 015 726
- DE-A1-102004 045 885
- DE-A1-102006 028 046
- DE-C1- 10 039 432
- US-A1- 2003 025 676

## Beschreibung

Die Erfindung betrifft eine Anzeige- und Bedienvorrichtung sowie ein Verfahren zum Betreiben einer solchen Bedienvorrichtung für ein Kraftfahrzeug zum Bedienen mindestens eines Fahrzeugsystems oder eines Dienstes, umfassend eine Anzeigevorrichtung zum Erzeugen einer visuell wahrnehmbaren Darstellung auf einer Anzeigefläche und eine Steuereinheit, die ausgestaltet ist, die Anzeigevorrichtung in einem Anzeigemodus und in einem Bedienmodus zu betreiben, wobei in dem Anzeigemodus Informationen über das mindestens eine Fahrzeugsystem oder den mindestens einen Dienst auf der Anzeigefläche dargestellt sind und in dem Bedienmodus mindestens ein Bedienelement oder eine Bedienelementzuordnung für mindestens ein weiteres Bedienelement zusätzlich oder zumindest für eine optimale Betätigung verändert dargestellt sind.

In modernen Kraftfahrzeugen werden Anzeige- und Bedienvorrichtungen bereits heute vielfach eingesetzt, um eine Bedienung von Fahrzeugsystemen zu ermöglichen. Als Fahrzeugsystems werden im Folgenden sämtliche in Hardware oder Software ausgeführte Bestandteile des Kraftfahrzeugs sowie von diesen bereitgestellte Funktionen angesehen. Als Dienste werden solche Informationen und Anwendungen angesehen, die nicht unmittelbar auf dem Fahrzeug ausgeführt werden müssen. Beispielsweise kann über ein Kommunikationssystem, insbesondere ein Mobilfunkkommunikationssystem, auf der Anzeigevorrichtung die grafische Darstellung einer auf einem fahrzeugexternen Computer ablaufenden Anwendung dargestellt sein, die von dem Fahrzeug aus anforderbar und/oder bedienbar ist. Eine genaue Abgrenzung zwischen einem Dienst und einem Fahrzeugsystem ist häufig nur schwierig möglich und für die weitere Erörterung auch nicht von Belang.

Die gegenwärtig in Fahrzeugen eingesetzten Anzeige- und Bedienvorrichtungen sind häufig so ausgestaltet, dass um die Anzeigefläche herum in Hardware ausgeführte Bedienelemente angeordnet sind. Auf der Anzeigefläche werden dann kontextabhängig Bedienelementzuordnungen eingeblendet, die die jeweiligen Funktionen und/oder Systeme kennzeichnen, die durch die entsprechenden Bedienelemente bedient und gesteuert werden können. Handelt es sich bei der Anzeigevorrichtung um eine flächenprogrammierbare Bedienvorrichtung, beispielsweise einen Touchscreen, so können auch direkt Bedienelemente auf der Anzeigefläche der Bedienvorrichtung eingeblendet werden, die durch eine Berührung mittels eines Betätigungselements im Falle eines Touchscreens betätigt werden können. Bei dem Betätigungselement wird es sich in der Regel um ein Körperteil, insbesondere einen Finger, eines Nutzers handeln. Ebenso kann es sich jedoch auch um einen Gegenstand handeln, den der Nutzer in der Hand hält oder einen Handschuh, der über die Hand gezogen ist, usw.

Durch die ständig steigende Anzahl von Komfortfunktionen, beispielsweise im Multimediabereich, steigt die Anzahl von Informationen, die einem Fahrer zur Verfügung gestellt werden können. Gleichzeitig ist jedoch die Größe der Anzeigefläche in der Regel in einem Kraftfahrzeug begrenzt. Soll die Anzeigefläche darüber hinaus auch verwendet werden, um Bedienelemente darzustellen, die im Folgenden als virtuelle Bedienelemente bezeichnet werden, oder Bedienelementzuordnungen für in Hardware ausgeführte Bedienelemente, vorzugsweise unmittelbar angrenzend an die Anzeigefläche der Anzeigevorrichtung angeordnete Bedienelemente, darzustellen, so entsteht hier ein Ressourcenkonflikt. Aus dem Stand der Technik ist es bekannt, über das Betätigen eines Bedienelements zwischen einem Anzeigemodus und einem Bedienmodus umzuschalten, um diesem Ressourcenkonflikt zu begegnen. Eine solche Anzeige- und Bedienvorrichtung ist aus EP 1406160A2 bekannt.

Der Erfindung liegt die technische Aufgabe zugrunde, eine Anzeige- und Bedienvorrichtung sowie ein Verfahren zum Betreiben einer solchen Anzeige- und Bedienvorrichtung zu schaffen, mit dessen eine einfachere und komfortablere Bedienung von Fahrzeugsystemen und Diensten möglich ist, insbesondere solchen Fahrzeugsystemen und Diensten, über die oder von denen Informationen auf der Anzeige- und Bedienvorrichtung zu dem Zeitpunkt dargestellt sind, an dem eine Bedienung vorgenommen werden soll, und zugleich eine Informationsvermittlung über die Anzeigevorrichtung, die nicht mit der Bedienung verknüpft ist, möglichst optimal zu gestalten.

Die technische Aufgabe wird erfindungsgemäß durch eine Anzeige- und Bedienvorrichtung mit den Merkmalen des Patentanspruchs 1 sowie ein Verfahren mit den Merkmalen des Patentanspruchs 9 gelöst. Vorteilhafte Ausgestaltungen der Erfindung sind in den Unteransprüchen beschrieben.

Hierfür ist vorgesehen, dass mit der Steuereinheit, die die Anzeigevorrichtung steuert, mindestens eine ortsauflösende Erfassungseinheit zum Erfassen einer räumlichen Position eines Betätigungselements, insbesondere eines Fingers eines Nutzers, relativ zu der Anzeigefläche gekoppelt ist, wobei die Steuereinheit ausgebildet ist, beim Erfassen einer Annäherung des Betätigungselements an die Anzeigefläche von dem Anzeigemodus in den Bedienmodus umzuschalten und wobei nach dem Umschalten von dem Anzeigemodus in den Bedienmodus zunächst ein Sofortbedienmenü dargestellt ist, dessen Darstellung von einer Anwesenheit des Betätigungselements in einem relativ zu der Anzeigefläche festgelegten, im Erfassungsbereich der Erfassungseinheit liegenden Haltevolumen abhängig ist. Mittels der mindestens einen ortsauflösenden Erfassungseinheit wird eine räumliche Position eines Betätigungselements relativ zu der Anzeigefläche erfasst. Als Betätigungselement wird hier jeder Gegensand angesehen, mit dem ein Bedienelement betätigbar ist. Hauptsächlich wird als Betätigungselement somit insbesondere ein Finger eines Nutzers in Betracht zu ziehen sein. Hierbei spielt es keine Rolle, ob der Nutzer einen Handschuh trägt oder nicht. Ferner kann als Betätigungselement auch ein von dem Nutzer gehaltener Gegenstand infrage kommen, beispielsweise ein Stift. In jedem Fall handelt es sich bei dem Betätigungselement um einen Gegenstand, der zum Auslösen einer Betätigung eines Bedienelements im Raum von dem Nutzer bewegt wird. Beim Erfassen einer Annäherung des Betätigungselements an die Anzeigefläche wird von dem Anzeigemodus in den Bedienmodus umgeschaltet. Wie eingangs ausgeführt ist, werden im Anzeigemodus Informationen über mindestens ein Fahrzeugsystem oder einen Dienst auf einer Anzeigefläche der Anzeigevorrichtung dargestellt. Im Bedienmodus wird zusätzlich mindestens ein Bedienelement oder mindestens eine Bedienelementzuordnung für mindestens ein weiteres Bedienelement zusätzlich eingeblendet oder das mindestens eine Bedienelement oder die mindestens eine Bedienelementzuordnung gegenüber dem Anzeigemodus für eine optimale Betätigung verändert dargestellt. Beim Erfassen der Annäherung des Betätigungselements wird somit entweder ein zusätzliches Bedienelement oder eine Bedienelementzuordnung zusätzlich grafisch dargestellt oder eine Bedienelementzuordnung oder ein Bedienelement, welches auch im Anzeigemodus grafisch dargestellt ist, für eine Bedienung optimiert im Bedienmodus dargestellt. Die Darstellung erfolgt in einem Sofortbedienmenü. Das Verfahren ist so ausgestaltet, dass die Darstellung des Sofortbedienmenüs von einer Anwesenheit des Betätigungselements in einem relativ zu der Anzeigefläche festgelegten und im Erfassungsbereich der Erfassungseinheit liegenden Haltevolumen abhängig ist. Das Haltevolumen umfasst in der Regel zumindest die Raumpunkte, die in einem vorgegebenen Abstandsbereich senkrecht vor der Anzeigefläche liegen. Bei einer rechteckig und flach ausgebildeten Anzeigefläche, beispielsweise einer als LCD-Anzeige ausgebildeten Anzeigefläche, umfasst das Haltevolumen in der Regel ein quaderförmiges Raumgebiet, dessen eine Seitenfläche mit der Anzeigefläche übereinstimmt. Die beschriebene Ausführungsform der Anzeige- und Bedienvorrichtung weist den Vorteil auf, dass ein Umschalten aus dem Anzeigemodus in den Bedienmodus automatisch bei einer Annäherung des Betätigungselements an die Anzeigefläche erfolgt. Ein Bedienschritt, d.h. eine Betätigungshandlung, die im Stand der Technik erforderlich ist, um von dem Anzeigemodus in den Bedienmodus umzuschalten, wird eingespart. Die Abhängigkeit der Darstellung des Sofortbedienmenüs von einer Anwesenheit des Betätigungselements in dem Haltevolumen weist den weiteren Vorteil auf, dass auch in solchen Fällen, in denen das Betätigungselement zwar der Anzeigefläche angenähert wird, jedoch keine Betätigung eines der Bedienelemente vorgenommen wird, die eine Rückkehr in den Anzeigemodus bewirkt, nach einem Entfernen des Betätigungselements aus dem Haltevolumen, ebenfalls ohne eine weitere Betätigungshandlung in den Anzeigemodus zurückgewechselt wird, wie bei der Annäherung aus dem Anzeigemodus in den Bedienmodus gewechselt wird. Solange eine Bedienung durch das Betätigungselement wahrscheinlich oder möglich ist, d.h. solange sich das Betätigungselement in dem Haltevolumen aufhält, wird nicht automatisch in den Anzeigemodus gewechselt.

Die Erfindung bietet den weiteren Vorteil, dass in dem Sofortbedienmenü kein Bedienelement vorgesehen sein muss, dessen Betätigung einen Wechsel zurück aus dem Bedienmodus in den Anzeigemodus auslöst. Ebenso wenig ist eine entsprechende Bedienelementzuordnung für ein weiteres Bedienelement, welches nicht als virtuelles Bedienelement auf der Anzeigevorrichtung ausgebildet ist, notwendig. Hierdurch wird erreicht, dass eine größere Anzahl von Bedienelementen für andere Bedienaufgaben zur Verfügung steht bzw. die Fläche, die für die übrigen Bedienelemente oder das Anzeigen von Informationen zur Verfügung steht, größer ist. Größere Bedienelemente ermöglichen eine einfachere Bedienung, insbesondere bei Fahrt über unebene Fahrbahnbelege.

Es ist daher vorgesehen, dass die Steuereinheit ausgestaltet ist, einen Wechsel aus dem Bedienmodus in den Anzeigemodus vorzunehmen, wenn im Bedienmodus ein Sofortmenü dargestellt ist und eine Abwesenheit des Betätigungselements in dem Haltevolumen erfasst ist. Dies bedeutet, dass, sobald die Erfassungseinheit eine Anwesenheit des Betätigungselements in dem Haltevolumen nicht mehr feststellen kann, eine Abwesenheit erkannt wird und bei dieser Ausführungsform die Darstellung des Sofortbedienmenüs beendet wird. Auf der Anzeige- und Bedienvorrichtung wird stattdessen die im jeweiligen Fahrzeugkontext aktuelle Information über Fahrzeugsysteme und/oder Dienste angezeigt. Dies bedeutet, dass die Darstellungsdauer des Sofortbedienmenüs von der Anwesenheit des Betätigungselements in dem Haltevolumen abhängig ist.

Um eine gute Bedienbarkeit auch in solchen Situationen zu ermöglichen, in denen das Betätigungselement, beispielsweise ein Finger, der Anzeigefläche so angenähert wird, dass sich das Bedienelement an einem äußeren Rand des Haltevolumens befindet und beispielsweise bei einer Fahrt auf unruhiger Fahrbahn aufgrund der auf den Körper übertragenen Vibration kurzfristig oder für den Nutzer unbemerkt aus dem Haltevolumen bewegt wird, ist bei einer alternativen Ausführungsform vorgesehen, dass die Steuereinheit ausgestaltet ist, einen Wechsel aus dem Bedienmodus in den Anzeigemodus nach einem Ablauf eines ersten Zeitintervalls bei dem Zeitpunkt vorzunehmen, an dem eine Anwesenheit des Betätigungselements in dem Haltevolumen nicht mehr erfasst ist, wenn im Bedienmodus ein Sofortmenü dargestellt ist. Bei dieser Ausführungsform ist ein erstes vorgegebenes Zeitintervall vorgesehen, das zunächst verstreicht, wenn der Nutzer das Betätigungselement aus dem Haltebereich entfernt, bevor aus dem Bedienmodus zurück in den Anzeigemodus gewechselt wird.

In einem Sofortbedienmenü sind vorzugsweise Bedienelemente untergebracht, die zu einer unmittelbaren Bedienung des Fahrzeugsystems vorgesehen sind, über das Informationen zum Zeitpunkt des Wechsels aus dem Anzeigemodus in den Bedienmodus auf der Anzeigefläche dargestellt sind. Vorzugsweise sind dieses ebenfalls Bedienoptionen, die eine geringe Komplexität aufweisen. Eine Komplexität einer Bedienhandlung in dem hier verwendeten Sinne hängt u.a. von der Anzahl der Betätigungsvorgänge ab, die zum Ausführen einer Bedienhandlung oder Bedienoption notwendig sind. Wird die Anzeige- und Bedienvorrichtung beispielsweise verwendet, um einen CD-Player zu bedienen, und werden im Anzeigemodus beispielsweise Informationen über die eingelegte CD und den wiedergegebenen Titel angezeigt, so würde ein zugehöriges Sofortmenü, das bei einer Annäherung eines Fingers des Nutzers auf der Anzeigevorrichtung eingeblendet wird, vorzugsweise ein als Pausetaste ausgebildetes Bedienelement, ein als Stopptaste ausgebildetes Bedienelement, ein als Rückwärtsspultaste ausgebildetes Bedienelement, ein als Rücksprungtaste ausgebildetes Bedienelement usw. umfassen. Diese Bedienelemente bewirken unmittelbar eine Änderung des bedienten Fahrzeugsystems. Alle durch diese Bedienelemente auslösbaren Bedienoptionen bzw. vornehmbaren Bedienhandlungen weisen eine geringe Komplexität auf, nämlich jeweils eine einfache Betätigung des jeweiligen Bedienelements, gegebenenfalls noch abhängig von der Dauer der Betätigung, beispielsweise im Falle des als Rückspultaste ausgebildeten Bedienelements.

Bestimmte Fahrzeugsysteme oder Dienste benötigen jedoch eine komplexere Bedienhandlung, bei der mehrere Betätigungen eines oder mehrerer Bedienelemente notwendig sind. Daher ist bei einer bevorzugten Ausführungsform vorgesehen, dass im Bedienmodus ein Tiefenmenü, in der Regel über eine Betätigungshandlung, aktivierbar ist und ein Wechsel aus dem Bedienmodus in den Anzeigemodus bei einem Erfassen einer Abwesenheit des Betätigungselements in dem Haltevolumen erst nach einem hiernach erfolgten Ablauf eines vorgegebenen dritten Zeitintervalls erfolgt, wenn in dem Bedienmodus ein Tiefenmenü dargestellt ist. Ein Tiefenmenü unterscheidet sich von einem Sofortmenü somit dadurch, dass in jedem Falle ein drittes Zeitintervall nach dem Entfernen des Bedienelements aus dem Haltevolumen verstreicht, bevor aus dem Bedienmodus in den Anzeigemodus zurückgewechselt wird, wenn zuletzt im Bedienmodus ein Tiefenmenü dargestellt ist. In der Regel wird das dritte Zeitintervall größer sein als ein erstes Zeitintervall, auch dann, wenn aus dem Sofortmenü nicht unmittelbar bei Entfernen des Betätigungselements aus dem Haltevolumen in den Bedienmodus zurückgewechselt wird, sondern zunächst auch ein erstes Zeitintervall abgewartet wird, bevor aus dem Bedienmodus in den Anzeigemodus zurückgewechselt wird. Der Vorteil, ein drittes Zeitintervall auf jeden Fall abzuwarten, liegt darin, dass ein Nutzer häufig eine längere Zeitspanne benötigt, um einen komplexeren Bedienvorgang abschließen zu können. Um eine gute Sicht auf die Anzeigevorrichtung zu haben, wird er häufig seine Hand von der Anzeigefläche nach einer ersten Annäherung oder sogar nach einer ersten Bedienhandlung, d.h. Betätigung eines ersten Bedienelements, zurückziehen. Hierbei wird das Haltevolumen häufig verlassen, dennoch soll der Nutzer den Bedienvorgang ungestört fortsetzen können.

Um dem Nutzer eine Rückmeldung zu geben, dass er mit dem Betätigungselement das Haltevolumen verlassen hat, ist bei einer bevorzugten Ausführungsform der Erfindung vorgesehen, dass die Steuereinheit ausgestaltet ist, die visuell wahrnehmbare Darstellung des Sofortmenüs und/oder des Tiefenmenüs beim Erfassen der Abwesenheit des Betätigungselements' in dem Haltevolumen abzuändern, insbesondere indem eine Helligkeit, eine Einfärbung und/oder ein Transparenzniveau für das mindestens eine Bedienelement oder die mindestens eine Bedienelementzuordnung für das mindestens eine weitere Bedienelement, die jeweils zusätzlich im Bedienmodus dargestellt oder zumindest für eine optimale Betätigung verändert grafisch dargestellt sind, verändert werden. Beispielsweise kann vorgesehen sein, dass das Sofortmenü, welches farbig gestaltete Bedienelemente und/oder Bedienelementzuördnungen umfasst, so verändert wird, dass die Bedienelemente und/oder Bedienelementzuordnungen in eine Schwarz-Weiß- oder Graustufendarstellung wechseln, wenn das Betätigungselement das Haltevolumen verlässt. Wird ein Tiefenmenü dargestellt, wenn das Betätigungselement das Haltevolumen verlässt, so ist vorzugsweise vorgesehen, dass ein fünftes Zeitintervall vorgesehen ist, das beginnend mit dem Erfassen der Abwesenheit des Betätigungselements verstreichen muss, bevor eine Änderung der Darstellung des Tiefenmenüs stattfindet.

Bei einer bevorzugten Ausbildung der Erfindung ist vorgesehen, dass die Steuereinheit ausgestaltet ist, eine nach einem Verstreichen eines zweiten Zeitintervalls, wenn im Bedienmodus ein Sofortmenü dargestellt, und/oder nach Ablauf eines vierten Zeitintervalls, wenn im Bedienmodus ein Tiefenmenü dargestellt ist, ab dem Zeitpunkt, an dem die Abwesenheit des Betätigungselements in dem Haltevolumen erfasst ist, das Transparenzniveau für das mindestens eine Bedienelement und/oder die mindestens eine Bedienelementzuordnung für das mindestens eine weitere Bedienelement, die jeweils zusätzlich im Bedienmodus dargestellt oder zumindest für eine optimale Betätigung verändert grafisch dargestellt sind, vorzugsweise stetig, bis zum Ablauf des ersten Zeitintervalls oder entsprechend des dritten Zeitintervalls auf 100 % zu erhöhen, wobei das zweite Zeitintervall kürzer als das erste Zeitintervall und das vierte Zeitintervall kürzer als das dritte Zeitintervall sind. Ist für das Tiefenmenü zusätzlich vorgesehen, dass eine Veränderung der grafischen Darstellung erst nach einem Ablauf des fünften vorgegebenen Zeitintervalls erfolgt, so ist das vierte Zeitintervall größer als das fünfte Zeitintervall zu wählen. Bei einer solchen Ausführungsform verändert sich die Darstellung eines Sofortmenüs beim Entfernen des Betätigungselements aus dem Haltevolumen und wird dann nach Ablauf des zweiten Zeitintervalls seit dem Entfernen des Betätigungselements aus dem Haltevolumen bis zum Ablauf des ersten Zeitintervalls seit dem Entfernen des Betätigungselements aus dem Haltevolumen ausgeblendet, indem das Transparenzniveau bis auf 100 % erhöht wird, was gleichbedeutend damit ist, dass eine Deckkraft auf null reduziert wird. Für ein Tiefenmenü ist vorzugsweise vorgesehen, dass sich die Darstellung des Tiefenmenüs beim Entfernen des Betätigungselements aus dem Haltevolumen zunächst für das vorgegebene fünfte Zeitintervall nicht verändert, danach seine Darstellung ändert und nach dem Ablauf des vierten Zeitintervalls bis zum Ablauf des dritten Zeitintervalls ausgeblendet wird. Beim Erreichen des Transparenzniveaus von 100 % wird jeweils der Bedienmodus beendet.

Das Ausblenden ermöglicht einen stufenlosen Übergang in den Anzeigemodus.

Dieses stufenlose Übergehen in den Anzeigemodus kann besonders vorteilhaft bei einer Ausführungsform gestaltet werden, bei der vorgesehen ist, dass im Bedienmodus zumindest das Sofortmenü überlagert über die Informationen, die im Anzeigemodus dargestellt sind; darstellbar ist, so dass zumindest ein Teil der im Anzeigemodus dargestellten Informationen über das mindestens eine Fahrzeugsystem oder den im Anzeigemodus dargestellten Dienst wahrnehmbar sind. Bei einer solchen Ausführungsform kann beispielsweise vorgesehen sein, dass Bedienelemente und/oder Bedienelementzuordnungen nur in einzelnen ausgezeichneten Bereichen der Anzeigefläche dargestellt werden. Ebenso ist es möglich, dass die Bedienelemente und/oder Bedienelementzuordnungen mit einem Transparenzniveau, welches von 0 % abweicht, dargestellt sind. Beispielsweise können die Bedienelemente und Bedienelementzuordnungen ein Transparenzniveau von 20 % aufweisen. Somit ist während der Bedienhandlung zumindest im Sofortmenü noch die Information über das Fahrzeugsystem bzw. des Dienstes zusätzlich zu den Bedienelementen und/oder Bedienelementzuordnungen wahrnehmbar. Ein stetiges Ausblenden des Sofortbedienmenüs beim Entfernen des Betätigungselements aus dem Haltevolumen führt somit übergangslos zu der Anzeigedarstellung, die im Anzeigemodus vorgesehen ist. Hierbei kann es bei einer Betätigungshandlung eines Bedienelements während des Bedienmodus zu einer Änderung der dargestellten Informationen kommen, die im zugehörigen Anzeigemodus dargestellt würden und dem Sofortbedienmenü hinterlegt sind. Wird in einem Sofortbedienmenü zu einem CD-Player beispielsweise ein als Vorsprungtaste ausgebildetes Bedienelement betätigt, so würde eine im Hintergrund sichtbare Titelanzeige den nun ausgewählten Titel anzeigen. Bei der Darstellung eines Tiefenmenüs wird es bevorzugt, die Bedienelemente und Bedienelementzuordnungen mit einer Deckkraft von 100 %, d.h. Transparenzniveau von 0 %, auf der Anzeigefläche darzustellen. Dennoch kann es auch hier von Vorteil sein, Informationen über das bediente Fahrzeugsystem, ein anderes Fahrzeugsystem oder einen Dienst darzustellen. Bei einer Ausführungsform der Erfindung ist daher vorgesehen, dass im Anzeigemodus sichtbare Informationen im Bedienmodus verkleinert dargestellt sind. Verkleinert dargestellt bedeutet, dass die Informationen im Vergleich zu einer Darstellung bei einem Wechsel in den Anzeigemodus verkleinert im Bedienmodus dargestellt sind.

Als besonders vorteilhaft hat es sich erwiesen vorzusehen, dass im Anzeigemodus auf der Anzeigefläche eine Information darstellbar ist, die eine Rückmeldung des bedienten mindestens einen Fahrzeugsystems oder eines bedienten weiteren Fahrzeugsystems oder eines Dienstes anzeigt. Hierdurch wird der Bedienkomfort für den Nutzer gesteigert, da er auch bei komplexen Bedienhandlungen eine Rückmeldung des Fahrzeugsystems erfährt. Hierdurch wird es leichter, komplexe Bedienhandlungen vorzunehmen und eine Wahrscheinlichkeit für eine Fehlbedienung verringert. Müsste ein Nutzer hingegen eine Vielzahl von Betätigungshandlungen vornehmen, ohne dass er eine Rückmeldung des entsprechenden oder der entsprechenden Fahrzeugsysteme erhält, so könnte er einzelne Bedienhandlungen, die fehlerhaft sind, nicht erkennen. Durch eine Rückmeldung, die von der erwarteten Rückmeldung abweicht, kann ein Nutzer hingegen bei einem komplexen Bedienvorgang einen falschen Bedienschritt während der Vornahme der komplexen Bedienhandlung erkennen und diesen isoliert rückgängig machen und muss nicht erneut die gesamte komplexe Bedienhandlung vornehmen.

Häufig sind benachbart zu der Anzeigefläche der Bedien- und Anzeigevorrichtung in Hardware ausgeführte Bedienelemente angeordnet, die ein Nutzer bedienen möchte, ohne von dem Anzeigemodus in den Bedienmodus der Anzeige- und Bedienvorrichtung zu wechseln. Daher hat es sich als vorteilhaft herausgestellt, zusätzlich zu dem Haltevolumen ein Aktivierungsvolumen festzulegen, wobei das Haltevolumen zumindest einen Teil des Aktivierungsvolumens umfasst und ein Annähern an die Anzeigeflächen nur erkannt wird, wenn das Betätigungselement in dem Aktivierungsvolumen erfasst ist. Das Aktivierungsvolumen wird vorzugsweise so festgelegt, dass es über der Mitte der Anzeigevorrichtung angeordnet ist. Hierdurch wird sichergestellt, dass nicht jedes Bewegen des Betätigungselements nahe an den Rand der Anzeigefläche zugleich als Bedienabsicht der Anzeige- und Bedienvorrichtung interpretiert wird. Insbesondere Bedienelementen, denen nicht über Bedienelementzuordnungen kontextabhängig Funktionen zugeordnet sind, können so von dem Fahrer betätigt werden, ohne von dem Anzeigemodus in den Bedienmodus der benachbart angeordneten Bedien- und Anzeigevorrichtung zu wechseln.

Um insbesondere in Situationen, in denen der Nutzer unbeabsichtigt das Betätigungselement aus dem Haltevolumen entfernt hat, schnell wieder in den Bedienkontext zurückkehren zu können, ist bei einer bevorzugten Ausführungsform der Erfindung vorgesehen, dass die mit dem Erfassen der Abwesenheit des Betätigungselements in dem Haltevolumen oder hiernach vorgenommene Änderungen an der grafischen Darstellung des Tiefenmenüs/Sofortmenüs rückgängig gemacht werden, wenn das Betätigungselement erneut in dem Haltevolumen oder in dem Aktivierungsvolumen erfasst wird, bevor das erste oder entsprechend das dritte Zeitintervall seit dem Erfassen der Abwesenheit abgelaufen sind.

Die Merkmale der erfindungsgemäßen Ausführungsformen des Verfahrens weisen dieselben Vorteile wie die entsprechenden Merkmale der erfindungsgemäßen Anzeige- und Bedienvorrichtung auf.

Die Erfindung wird nachfolgend anhand bevorzugter Ausführungsbeispiele näher erläutert. Hierbei zeigen:
- Fig. 1a, 1b: ein Ablaufdiagramm eines Verfahrens zum Betreiben einer Anzeige- und Bedienvorrichtung in einem Kraftfahrzeug,
- Fig. 2: eine schematische Darstellung einer Anzeige- und Bedienvorrichtung in einem Kraftfahrzeug,
- Fig. 3a - d: Ausgestaltungen eines Aktivierungsvolumens und eines Haltevolumens relativ zu einer Anzeigefläche;
- Fig. 4a - 7b: grafische Auftragungen des Transparenzniveaus (eines Deckungsniveaus) aufgetragen gegen die Zeit jeweils für ein Sofortbedienmenü und ein Tiefenbedienmenü,
- Fig. 8: eine schematische Darstellung der unterschiedlichen Bedienmodi einer Anzeige- und Bedienvorrichtung, und
- Fig. 9a - d: beispielhafte Ansichten einer Anzeigefläche einer Anzeige- und Bedienvorrichtung.

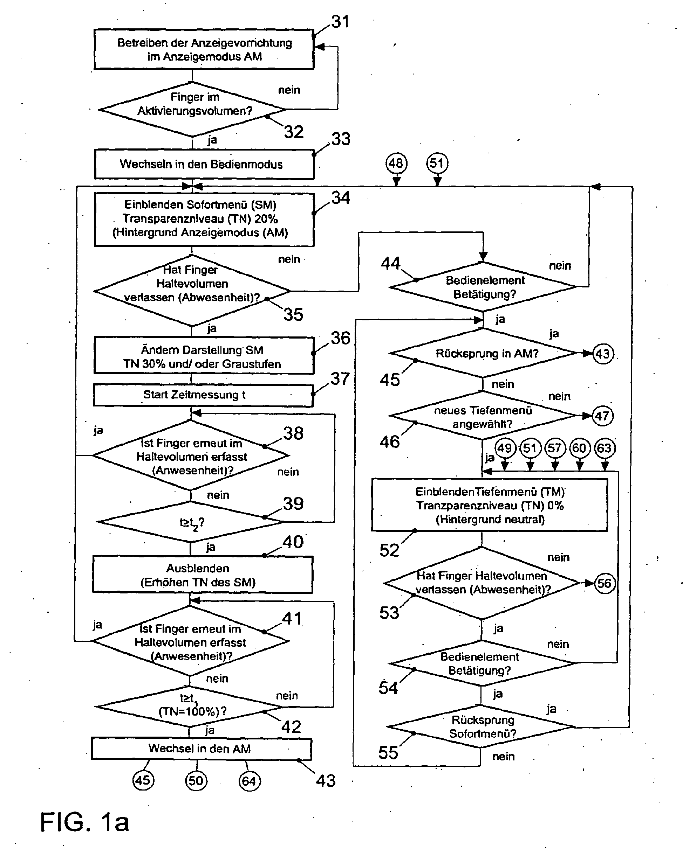

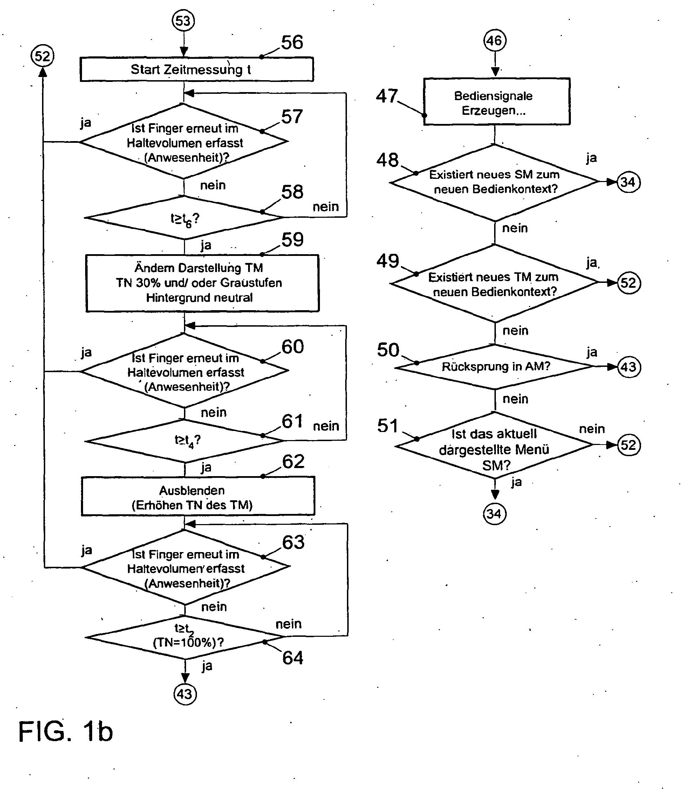

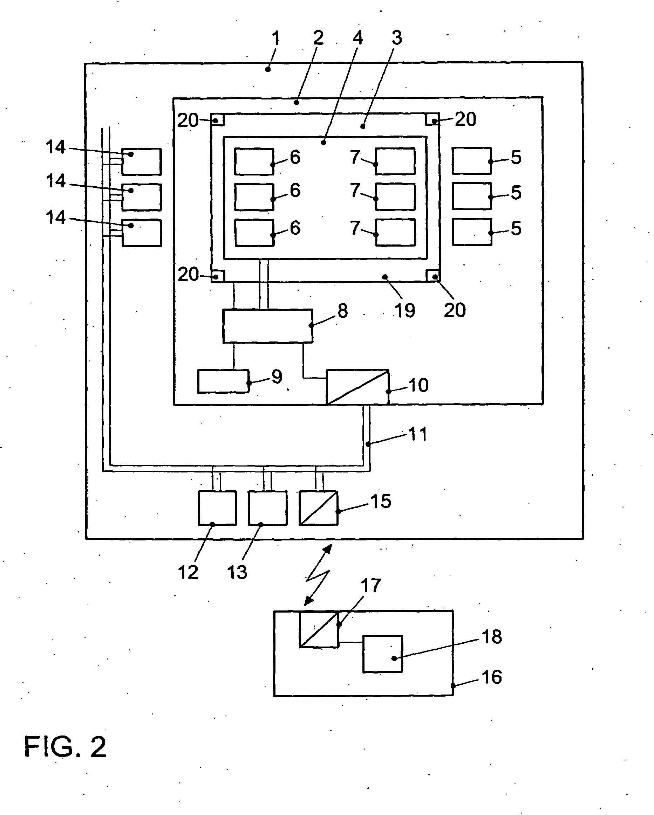

In Fig. 1a und 1b ist schematisch ein Ablaufdiagramm eines Verfahrens zum Betreiben einer Anzeige- und Bedienvorrichtung dargestellt. Eine solche Anzeige- und Bedienvorrichtung ist schematisch in Fig. 2 dargestellt. In Fig. 2 ist ein Kraftfahrzeug 1 dargestellt. Dieses umfasst eine Anzeige- und Bedienvorrichtung 2. Die Anzeige- und Bedienvorrichtung umfasst eine Anzeigevorrichtung 3 mit einer Anzeigefläche 4. Die Anzeigevorrichtung 3 ist vorzugsweise als Touchscreen ausgebildet. Die Anzeige- und Bedienvorrichtung 2 umfasst Bedienelemente 5, die in Hardware benachbart zu der Anzeigefläche 4 der Anzeigevorrichtung 3 angeordnet sind. Zusätzlich umfasst die Anzeige- und Bedienvorrichtung 2 mittels der als Touchscreen ausgebildeten Anzeigevorrichtung 3 ausgebildete virtuelle Bedienelemente 6. Diese können über eine Berührung der Anzeigefläche 4 an der Stelle, an der die virtuellen Bedienelemente 6 dargestellt sind, betätigt werden. Benachbart zu den Bedienelementen 5 sind auf der Anzeigefläche 4 Bedienelementzuordnungen 7 in einem Bedienmodus eingeblendet, die den Bedienelementen 5 im jeweiligen Bedienkontext zugeordnete Bedienoptionen, Funktion usw. angeben.

Mit der Anzeigevorrichtung 3 ist eine Steuereinheit 8 verbunden. Die Steuereinheit 8 ist in der Lage, die Anzeigevorrichtung 3 in einem Anzeigemodus und in einem Bedienmodus zu betreiben. Die Steuereinheit 8 ist ferner mit einer Speichervorrichtung 9, in der vorzugsweise ein Softwareprogramm abgelegt ist, mit welchem ein Verfahren, wie es beispielhaft anhand der Fig. 1a und 1b unten erläutert wird, ausgeführt werden kann. Die Steuereinheit 8 ist ferner über eine Schnittstelle 10 mit einem Fahrzeugbus 11 verbunden. Über den Fahrzeugbus ist die Anzeigeund Bedienvorrichtung mit Fahrzeugsystemen 12, 13 und anderen Bedienelementen 14 verbunden. Über den Fahrzeugdatenbus 10 und eine Fahrzeugschnittstelle 15 können Daten mit einer fahrzeugexternen Vorrichtung 16 ausgetauscht werden. Die fahrzeugexterne Vorrichtung 16 umfasst hierfür ebenfalls eine Sende- und Empfangsschnittstelle 17, die beispielsweise mit einer Rechnereinheit 18 verbunden ist. Die Rechnereinheit 18 kann beispielsweise einen Dienst zur Verfügung stellen, dessen Informationen auf der Anzeige- und Bedienvorrichtung 2 dargestellt werden und der über die Anzeige- und Bedienvorrichtung 2 bedient werden kann.

Die Anzeige- und Bedienvorrichtung 2 umfasst ferner eine Erfassungseinheit 19, die mehrere Sensoren 20 umfasst, mit denen ein Betätigungselement, beispielsweise ein Finger, vor der Anzeigefläche 4 der Anzeige- und Bedienvorrichtung 2 im Raum erfasst werden kann. Die Erfassungseinheit 19 kann unterschiedliche Verfahren zum Detektieren eines Betätigungselements verwenden.

Anhand von Fig. 1a und 1b soll nun erläutert werden, wie die Anzeige- und Bedienvorrichtung vorteilhaft betrieben werden kann. Zunächst wird die Anzeige im Anzeigemodus betrieben 31. Im Anzeigemodus werden auf der Anzeigefläche 4 der Anzeigevorrichtung 3 der Anzeige- und Bedienvorrichtung 2 Informationen über eines der Fahrzeugsysteme 12, 13 und/oder eines Dienstes angezeigt. Die Erfassungseinheit 19 überwacht ein Aktivierungsvolumen, welches sich vorzugsweise senkrecht von der Mitte der Anzeigefläche 4 in den Raum vor der Anzeigefläche 4 erstreckt. Es wird nun überprüft, ob ein Finger, der im Folgenden als Betätigungselement verwendet wird, in einem Aktivierungsvolumen erfasst ist 32. Ist dies nicht der Fall, so wird die Anzeige- und Bedienvorrichtung 2 weiter im Anzeigemodus betrieben 31. Wird hingegen der Finger im Aktivierungsvolumen erfasst, so wird in einen Bedienmodus gewechselt 33. Im Bedienmodus wird ein Sofortbedienmenü dargestellt 34. Das Sofortbedienmenü umfasst mindestens ein Bedienelement oder eine Bedienelementzuordnung zusätzlich zu der Darstellung im Anzeigemodus oder zumindest eine veränderte Darstellung des mindestens einen Bedienelements oder der mindestens einen Bedienelementzuordnung in der Weise, dass diese für eine Bedienung optimiert dargestellt sind. Eine verbesserte Darstellung für die Bedienung bedeutet, dass das mindestens eine Bedienelement oder die mindestens eine Bedienelementzuordnung im Bedienmodus vergrößert im Verhältnis zum Anzeigemodus dargestellt sind. In der Regel werden jedoch im Bedienmodus zusätzliche Bedienelemente bzw. Bedienelementzuordnungen dargestellt werden.

im Sofortbedienmenü sind Bedienelemente vorgesehen, die kontextabhängig eine Bedienung des jeweiligen Fahrzeugsystems oder Dienstes ermöglichen, über den oder über die im Anzeigemodus Informationen angezeigt wurden. Ferner werden die Bedienelemente vorzugsweise zu solchen Bedienhandlungen oder Bedienoptionen gehören, die eine geringe Bedienkomplexität aufweisen, d.h., beispielsweise mittels eines einfachen Betätigens eines Bedienelements ausführbar sind.

Das Darstellen des Sofortbedienmenüs, welches kurz auch Sofortmenü genannt wird, erfolgt in der Regel so, dass es den Informationen, die im Anzeigemodus angezeigt waren, überlagert wird. Die Überlagerung erfolgt so, dass das Sofortmenü ein gewisses Transparenzniveau aufweist, welches sich sowohl von 0 % als auch von 100 % unterscheidet. Anders ausgedrückt wird das Sofortmenü mit einer Deckkraft eingeblendet, die größer als 0 % ist und kleiner als 100 %. Vorzugsweise wird die Deckkraft zwischen 60 % und 90 %, bevorzugt zwischen 70 % und 85 % und am bevorzugtesten 80 % betragen. Entsprechend wird das Transparenzniveau am bevorzugtesten,20 % betragen. Hierdurch wird erreicht, dass die im Anzeigemodus dargestellten Informationen weiterhin für den Nutzer wahrnehmbar sind, während das Sofortbedienmenü eingeblendet ist. Die eingeblendeten Bedienelemente und/oder Bedienelementzuordnungen müssen auch nicht die gesamte Anzeigefläche einnehmen.

Mittels der Steuereinheit 8 wird fortwährend überprüft, ob der Finger das Haltevolumen verlassen hat, was gleichbedeutend damit ist, dass überprüft wird, ob eine Abwesenheit des Betätigungselements (Finger) in einem Haltevolumen festgestellt worden ist 35. Das Haltevolumen ist so festgelegt, dass es vorteilhafterweise einen Raum im Erfassungsbereich der Erfassungseinheit umfasst, der sich in den Raum vor der Anzeigevorrichtung erstreckt und angrenzend an die Anzeigefläche der Anzeigevorrichtung diese Anzeigefläche vollständig überdeckt. Das Haltevolumen ist somit in der Regel größer als das Aktivierungsvolumen.

Die Wahl des Aktivierungsvolumens erfolgt vorzugsweise so, dass zumindest eine Betätigung von Bedienelementen, wie den anderen Bedienelementen 14 bei der Ausführungsform nach Fig. 2, möglich ist, ohne ein Umschalten von dem Anzeigemodus in den Bedienmodus der Anzeige- und Bedienvorrichtung 2 zu bewirken. Ist jedoch eine Bedienabsicht einmal erkannt, so soll die Anzeige- und Bedienvorrichtung 2 im Bedienmodus verbleiben, solange sich das Betätigungselement (Finger) vor oder nahe der Anzeigefläche befindet. Das Haltevolumen kann so ausgestaltet werden, dass es auch einen Raumbereich vor Bedienelementen umfasst, die benachbart zu der Anzeigefläche der Anzeige- und Bedienvorrichtung angeordnet sind. Hierdurch wird es möglich, Bedienhandlungen über diese Bedienelemente vorzunehmen, denen beispielsweise über die Bedienelementzuordnungen für den Nutzer die entsprechenden Bedienoptionen kenntlich gemacht sind, ohne das Haltevolumen zu verlassen.

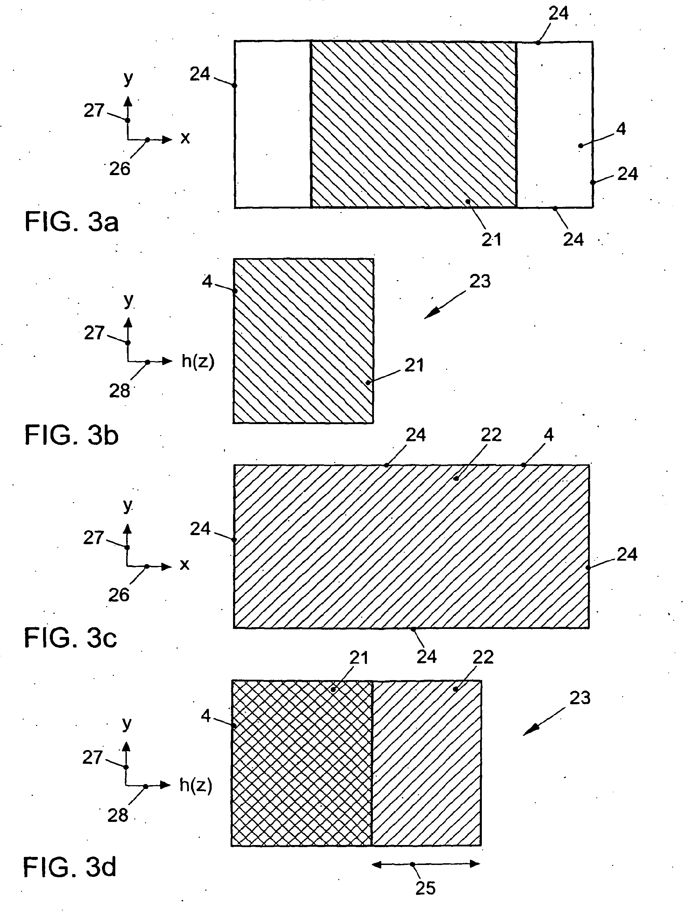

Beispielhafte Ausgestaltungen eines Aktivierungsvolumens 21 und des Haltevolumens 22 sind in Fig. 3a und 3b bzw. 3c und 3d dargestellt. Das Aktivierungsvolumen 21 ist mittig vor der Anzeigefläche 4 angeordnet, die sich in einer x-y-Ebene befindet, und erstreckt sich in der gezeigten Ausführungsform nur über einen Teil der Anzeigefläche 4 und senkrecht in einen Raum 23 vor der Anzeigefläche 4. In den Figuren 3a bis 3d sind jeweils die zur Ansicht gehörigen Koordinatenachsen, x-Achse 26, y-Achse 27 und h-Achse 28, eines rechtshändigen Koordinatensystems dargestellt, wobei sich die h-Achse in den Raum 23 vor der Anzeigefläche 4 erstreckt.

Das Haltevolumen 22 erstreckt sich über die gesamte Anzeigefläche 4 und senkrecht in den Raum 23 vor der Anzeigefläche 4. Das Haltevolumen 22 umfasst das Aktivierungsvolumen 21 vorzugsweise vollständig. Das Haltevolumen kann sich in der Ebene der Anzeigefläche auch über deren seitliche Grenzen 24 heraus erstrecken, um eine Betätigung von dort angeordneten Bedienelementen zu ermöglichen, ohne das Haltevolumen verlassen zu müssen.

Hat der Finger das Haltevolumen verlassen, so wird bei der hier beschriebenen Ausführungsform die Darstellung des Sofortmenüs dahingehend abgeändert, dass das Transparenzniveau erhöht wird 36, beispielsweise auf 30 %. Zusätzlich oder alternativ kann die Darstellung der eingeblendeten Bedienelemente und/oder Bedienelementzuordnungen auch in Graustufen erfolgen. Andere Ausgestaltungen der Änderung sind möglich. Die Änderung der Darstellung soll so vorgenommen werden, dass dem Nutzer grafisch mitgeteilt wird, dass er mit dem Finger das Haltevolumen verlassen hat. Ein darüber hinausgehender Informationsverlust bezüglich der im Sofortbedienmenü enthaltenen Informationen soll jedoch nicht stattfinden.

Das Haltevolumen 22 erstreckt sich vorzugsweise in tiefer in den Raum 23 als das Aktivierungsvolumen 21. Hierdurch wird eine "natürliche Hysterese" für eine Aktivierung und ein anschließendes Verlassen des Haltevolumens geschaffen. Hiermit ist gemeint, dass es erforderlich ist, das Betätigungselement aktiv über eine gewisse Distanz, die etwa einem Tiefenunterschied 25 des Aktivierungsvolumens 21 und des Haltevolumens 22 entspricht, nach dem Aktivieren bewegt werden muss, bevor das Haltevolumen wieder verlassen ist. Ein unbeabsichtigtes sofortiges Verlassen des Haltevolumens und die hiermit verknüpfte Änderung der Darstellung des entsprechenden Bedienmenüs (Softmenü oder Tiefenmenü) und/oder ein Wechsel in den Anzeigemodus (wie unten beschrieben wird) werden vermieden.

Sobald eine Abwesenheit des Betätigungselements (Fingers) im Haltevolumen erfasst ist, wird eine Zeitmessung gestartet 37.

Anschließend wird überprüft, ob der Finger erneut im Haltevolumen erfasst wird 38. Ist dies der Fall, so wird die vorgenommene Änderung an der Darstellung des Sofortbedienmenüs rückgängig gemacht und das Verfahren im Verfahrensschritt 34 fortgesetzt. Ist der Finger nicht erneut im Haltevolumen erfasst worden, so wird überprüft, ob seit der Zeit des Verlassens des Haltevolumens eine Zeitdauer verstrichen ist, die größer als ein vorgegebenes zweites Zeitintervall ist 39. Ist dies nicht der Fall, so wird mit der Überprüfung fortgefahren, ob der Finger erneut im Haltevolumen erfasst ist 38.

Ist die Zeitspanne seit dem Verlassen des Haltevolumens größer als das vorgegebene zweite Zeitintervall, so wird das Sofortmenü kontinuierlich oder stufenweise ausgeblendet 40. Dies bedeutet, dass das Transparenzniveau angehoben bzw. die Deckkraft abgesenkt wird. Auch während des Absenkens der Deckkraft bzw. Erhöhen des Transparenzniveaus des Sofortbedienmenüs wird überprüft, ob der Finger erneut im Haltevolumen erfasst ist 41. Ist dies der Fall, so wird das Sofortmenü wieder mit dem ursprünglichen Transparenzniveau, in der dargestellten Ausführungsform mit einem Transparenzniveau von 20 %, dargestellt 34.

Befindet sich der Finger nicht erneut im Haltevolumen, so wird überprüft, ob die Zeit seit dem Verlassen des Halteniveaus größer als ein erstes Zeitintervall ist 42. Dies ist gleichbedeutend mit der Frage, ob ein Transparenzniveau von 100 % erreicht ist, sofern das Ausblenden so ausgestaltet ist, dass zum Ausblenden eine Zeitspanne verwendet wird, die der Differenz des ersten Zeitintervalls und des zweiten Zeitintervalls entspricht, um das Transparenzniveau von 30 % auf 100 % anzuheben. Ist die erforderliche Zeit noch nicht vergangen bzw. das Transparenzniveau von 100 % noch nicht erreicht, so wird mit dem Ausblenden fortgefahren 40. Ist hingegen die erforderliche Zeit abgelaufen bzw. das Transparenzniveau von 100 % erreicht, wird in den Anzeigemodus zurückgewechselt 43. Hierfür ist keine erneute Bedienhandlung des Nutzers erforderlich.

Hat die Abfrage 35 hingegen ergeben, dass sich der Finger nach wie vor im Haltevolumen befindet, so wird überprüft, ob eines der Bedienelemente betätigt worden ist 44. Ist dies nicht der Fall, so wird mit dem Einblenden des Sofortmenüs fortgefahren 34. Hat hingegen eine Betätigung eines Bedienelements stattgefunden, so wird überprüft, ob ein Rücksprung in den Anzeigemodus ausgelöst ist 45. Ist dieses der Fall, so wird in den Anzeigemodus zurückgewechselt 43. Hier soll angemerkt werden, dass in der Regel in einem Sofortbedienmenü kein Bedienelement zum Auslösen eines Rücksprungs (einer Rückkehr) in den Anzeigemodus vorgesehen ist. Da bei der hier beschriebenen Ausführungsform einige Verfahrensschritte aufgrund von Verzweigungen des Verfahrens auch ausgeführt werden, wenn ein Tiefenbedienmenü angewählt ist, ist diese Abfrage an dieser Stelle vorgesehen.

Ist kein Rücksprung in den Anzeigemodus angefordert, so wird geprüft, ob ein Tiefenmenü angewählt ist 46. Ist kein Tiefenmenü angewählt, so wird mit einem Verfahrensschritt 47 fortgefahren, der in Fig. 1b dargestellt ist.

In diesem Verfahrensschritt 47 werden die notwendigen Bediensignale für das Fahrzeugsystem und/oder den Dienst erzeugt, der mit der Anzeige- und Bedienvorrichtung im aktuellen Bedienkontext mittels des Betätigens des Bedienelements bedient werden kann. Anschließend wird überprüft, ob durch die Bedienhandlung ein neuer Bedienkontext geschaffen wurde, zudem ein neues Sofortmenü existiert 48. Ist dies der Fall, so wird das Verfahren mit dem Verfahrensschritt 34 aus Fig. 1a fortgesetzt, und zwar mit dem Einblenden des aktuellen Sofortmenüs.

Existiert aufgrund der vorgenommenen Betätigung des Bedienelements kein neuer Bedienkontext, wird überprüft, ob ein neues Tiefenmenü zu dem Bedienkontext korrespondiert 49. Ist dies nicht der Fall, so wird geprüft, ob im Kontext der Bedienhandlung ein Wechsel in den Anzeigemodus angefordert ist 50. Ist dies der Fall, so wird in den Anzeigemodus zurückgewechselt, wie dies im Verfahrensschritt 43 nach Fig. 1a angedeutet ist.

Ist kein Rücksprung vorgesehen, so wird erst überprüft, ob das aktuell dargestellte Bedienmenü ein Sofortbedienmenü ist 51. Ist dies der Fall, so wird mit dem Einblenden des aktuellen Sofortmenüs gemäß Verfahrensschritt 34 nach Fig. 1a fortgefahren. Ist das aktuelle Bedienmenü ein Tiefenmenü, so wird mit dem Verfahrensschritt 52 nach Fig. 1a fortgefahren. Mit diesem Verfahrensschritt, dem Einblenden des aktuellen Tiefenmenüs 52, wird auch fortgefahren, wenn in dem Verfahrensschritt 49 festgestellt wurde, dass ein neues Tiefenmenü zu dem neuen Bedienkontext nach dem Betätigen des Bedienelements gehört. Ebenso wird mit dem Verfahrensschritt 52, dem Einblenden des aktuellen Tiefenmenüs, fortgefahren, wenn im Verfahrensschritt 46 nach Fig. 1a festgestellt wurde, dass ein Tiefenmenü angewählt ist.

Das Einblenden des Tiefenmenüs 52 erfolgt bevorzugt mit einem Transparenzniveau von 0 %, d.h. einer Deckkraft von 100 %. Vorzugsweise ist vorgesehen, dass dem zugehörigen Anzeigemodus während des Einblendens des Tiefenmenüs ein neutraler Hintergrund zugeordnet ist. Um dem Nutzer bei einer Bedienhandlung eine Rückmeldung zur Verfügung zu stellen, kann sowohl beim Einblenden des Sofortmenüs 34 als auch dem Einblenden eines Tiefenmenüs 52 vorgesehen sein, dass Informationen über das bediente System bzw. den bedienten Dienst in dem entsprechenden Bedienmenü zusätzlich zu Bedienelementen und Bedienelementzuordnurigen angezeigt werden.

Auch während des Einblendens des Tiefenmenüs wird überprüft, ob der Finger das Haltevolumen verlassen hat 53. Ist dies nicht der Fall, so wird erneut überprüft, ob ein Bedienelement betätigt wurde 54. Ist dies nicht der Fall, wird das Verfahren mit dem Verfahrensschritt, Einblenden des Tiefenmenüs 52, fortgesetzt. Fand eine Betätigung statt, so wird geprüft, ob ein Rücksprung in das Sofortmenü ausgelöst wurde 55.

Ist dies der Fall, so wird mit dem Verfahrensschritt 34, Einblenden des aktuellen Sofortmenüs, fortgefahren. Hierbei wird erneut der zum entsprechenden Anzeigemodus gehörende Informationsgehalt im Hintergrund eingeblendet. Wurde in der Abfrage 55 festgestellt, dass kein Rücksprung in das Sofortmenü erfolgen soll, so wird überprüft, ob ein Rücksprung in den Anzeigemodus ausgewählt ist 45. Der weitere Ablauf, der sich beginnend mit Verfahrensschritt 45 anschließt, ist bereits oben erläutert.

Hat die Abfrage 53 ergeben, dass der Finger das Haltevolumen verlassen hat, während ein Tiefenmenü angezeigt ist, so wird wie im Verfahrensschritt 37 im Verfahrensschritt 56 eine Zeitmessung gestartet. Anschließend wird in einem Verfahrensschritt 57 analog den Verfahrensschritten 38 und 41 überprüft, ob der Finger erneut im Haltevolumen erfasst worden ist 57. Ist dies der Fall, so wird das Verfahren mit dem Einblenden des Tiefenniveaus gemäß Verfahrensschritt 52 fortgesetzt. Ist dies nicht der Fall, wo wird in einem Verfahrensschritt 58 überprüft, ob die Zeit seit dem Verlassen des Haltevolumens größer oder gleich einem sechsten vorgegebenen Zeitintervall ist. Ist dies nicht der Fall, so wird das Verfahren mit der Abfrage gemäß Verfahrensschritt 57 fortgesetzt. Ist hingegen eine Zeitspanne seit dem Verlassen des Haltevolumens vergangen, die größer oder gleich des sechsten vorgegebenen Zeitintervalls ist, so wird die Darstellung des Tiefenmenüs geändert 59, indem das Transparenzniveau beispielsweise auf 30 % erhöht wird und/oder die Bedienelemente und die Bedienelementzuordnungen mittels Graustufen dargestellt werden. Der durch das Anheben des Transparenzniveaus sichtbar werdende Hintergrund ist neutral gewählt.

In einem nachfolgenden Verfahrensschritt wird erneut überprüft, ob der Finger erneut im Haltevolumen erfasst worden ist 60. Ist dies der Fall, so wird mit dem Verfahrensschritt 52 fortgefahren. Ist dies nicht der Fall, so wird in der Abfrage 61 gemäß Fig. 1b ermittelt, ob die seit dem Verlassen des Haltevolumens vergangene Zeit größer als ein vorgegebenes viertes Zeitintervall ist. Ist dies nicht der Fall, so wird mit der Abfrage 59 fortgefahren. Ist dies hingegen der Fall, wird ein Ausblenden des Tiefenniveaus begonnen 62. Hierzu wird das Transparenzniveau des Tiefenmenüs erhöht. Das Ausblenden erfolgt vorzugsweise so, dass das Transparenzniveau 100 % zu einem Zeitpunkt erreicht, an dem die seit dem Verlassen des Haltevolumens vergangene Zeit einem vorgegebenen dritten Zeitintervall entspricht.

Während des Ausblendens wird erneut in einem Abfrageschritt 63 überprüft, ob der Finger erneut im Haltevolumen erfasst worden ist. Ist dies der Fall, wird mit dem Einblenden des Tiefenmenüs mit einem Transparenzniveau von 0 % gemäß Verfahrensschritt 52 fortgefahren. Wurde der Finger nicht erneut in dem Haltevolumen erfasst, so wird überprüft, ob die seit dem Verlassen vergangene Zeit dem vorgegebenen dritten Zeitintervall entspricht 64. Dies ist gleichbedeutend mit der Abfrage, ob ein Transparenzniveau von 100 % erreicht ist. Ist dies nicht der Fall, so wird mit der Abfrage 63 fortgefahren. Ist hingegen das Transparenzniveau von 100 % erreicht, so wird in den Anzeigemodus zurückgewechselt, wie dies im Verfahrensschritt 43 angedeutet ist. Beim Wechsel wird im Anzeigemodus erneut die Informationen über mindestens ein Fahrzeugsystem oder einen Dienst angezeigt. Das Verfahren wird anschließend mit dem Verfahrensschritt 31 fortgesetzt und wird erst beendet, wenn die Anzeige- und Bedienvorrichtung abgeschaltet wird.

Bei der beschriebenen Ausführungsform wird jeweils überprüft, ob das Betätigungselement erneut in dem Haltevolumen erfasst ist. Um jedoch eine hystereseartige Ausgestaltung des Verfahrens bezüglich des "Verlassens" und erneuten "Eintretens" in das Haltevolumen zu erhalten, kann zur erneuten Aktivierung auch das Aktivierungsvolumen verwendet werden.

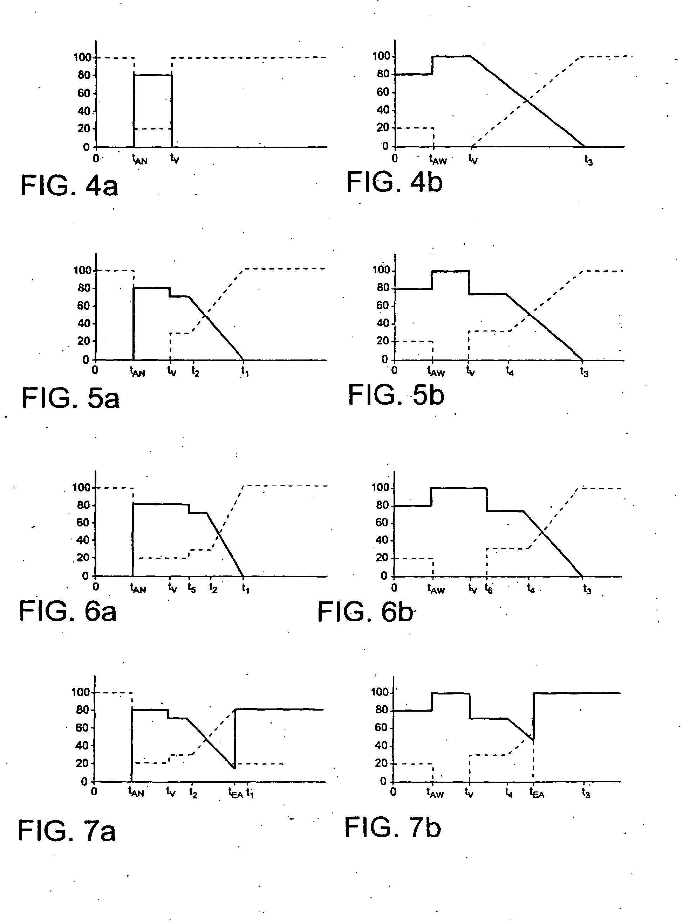

In den Grafen der Fig. 4a bis 7b ist die Deckkraft (DK) des jeweiligen Bedienmenüs jeweils mittels einer durchgezogenen Linie dargestellt, die mit einem Bezugszeichen 71 bezeichnet ist. Das Transparenzniveau (TN) ist jeweils mittels einer gestrichelten Linie dargestellt und mit einem Bezugszeichen 72 versehen. Die Ordinaten-Achse weist jeweils eine Prozentskala von 0 - 100 % auf. Auf der Abszissen-Achse ist die Zeit aufgetragen. In den Fig. 4a, 5a und 6a befindet sich die Anzeigevorrichtung zu einem Zeitpunkt 0 jeweils im Anzeigemodus. Zu einem Zeitpunkt t_{AN} wird eine Annäherung eines Betätigungselements in einem Aktivierungsvolumen erfasst. Die Anzeigevorrichtung wird daraufhin im Bedienmodus betrieben und ein Sofortmenü dargestellt. Das Sofortmenü wird in den dargestellten Ausführungsformen jeweils mit einer Deckkraft von etwa 80 % über die Anzeige eingeblendet, die im Anzeigemodus zu sehen war. Dies bedeutet, dass im Hintergrund der Anzeigemodus weiterhin sichtbar ist.

Zu einem Zeitpunkt tᵥ wird jeweils die Abwesenheit des Betätigungselements in einem Haltevolumen erfasst. Bei der Ausführungsform nach Fig. 4a wird beim Erfassen der Abwesenheit zurück in den Anzeigemodus gewechselt. Dies bedeutet, dass das eingeblendete Sofortmenü schlagartig ausgeblendet wird.

Bei der Ausführungsform nach Fig. 5a wird die Deckkraft zu dem Zeitpunkt tᵥ zunächst herabgesetzt bzw. das Transparenzniveau angehoben, um dem Nutzer zu signalisieren, dass das Betätigungselement das Haltevolumen verlassen hat. Zu einem Zeitpunkt t₂ wird dann mit einem stufenlosen Ausblenden des Sofortmenüs begonnen, das zu einem Zeitpunkt t₁ abgeschlossen ist. D.h., dass die Deckkraft 0 % erreicht hat bzw. das Transparenzniveau 100 % erreicht hat. Zu diesem Zeitpunkt wechselt die Anzeigevorrichtung in den Anzeigemodus zurück.

Bei der Ausführungsform nach 6a verbleibt die Deckkraft des Sofortmenüs zunächst unverändert, wenn das Betätigungselement zum Zeitpunkt tᵥ das Haltevolumen verlässt. Erst zu einem Zeitpunkt t₅ wird die Deckkraft herabgesetzt. An dem Zeitpunkt t₂ wird erneut mit dem Ausblenden begonnen, welches zum Zeitpunkt t₁ abgeschlossen ist, an dem dann der Wechsel in den Anzeigemodus stattfindet.

Das Unverändertlassen der Deckkraft des Sofortmenüs während eines Zeitintervalls Δt₅ zwischen dem Zeitpunkt tᵥ und dem Zeitpunkt t₅ bietet den Vorteil, dass das Herabsetzen der Deckkraft und Signalisieren der Abwesenheit des Betätigungselements im Haltevolumen hystereseartig ausgestaltet ist, so dass ein beständiger Wechsel der Deckkraft nicht stattfindet, wenn beispielsweise während der Fahrt mit dem Kraftfahrzeug auf unebener Fahrbahn die auf den Nutzer übertragenen Vibrationen dazu führen, dass das Betätigungselement an der Grenze des Haltevolumens aus diesem heraus und anschließend wieder in dieses herein alternierend bewegt wird.

In den Fig. 4b, 5b und 6b sind jeweils Ausgestaltungen der Darstellung des Tiefenmenüs in Abhängigkeit von der Anwesenheit des Betätigungselements im Haltevolumen dargestellt. Zu einem Zeitpunkt 0 ist jeweils ein Sofortmenü dargestellt, bei dem im Hintergrund die Ansicht des Anzeigemodus noch sichtbar ist. Zu einem Zeitpunkt t_{AW} findet eine Anwahl des Tiefenmenüs über die Betätigung eines Bedienelements im Sofortbedienmenü statt. Ebenso kann es vorkommen, dass ein Tiefenmenü in einem anderen Tiefenmenü ausgewählt wird. Dieser Fall ist grafisch nicht dargestellt. In einem solchen Fall würde das andere Tiefenmenü mit einer Deckkraft von 100 % bzw. einem Transparenzniveau von 0 % dargestellt. Die Darstellung des Tiefenbedienmenüs erfolgt ab dem Zeitpunkt t_{AW} jeweils mit einer Deckkraft von 100 % bzw. einem Transparenzniveau von 0 %. Zugleich ist als nicht sichtbarer oder sichtbarer Hintergrund ein neutraler Hintergrund vorgesehen. Dieser muss nicht zwangsläufig einfarbig sein, umfasst jedoch keine Informationen über Fahrzeugsysteme oder Dienste. Dennoch kann es vorgesehen sein, dass in einem Teilbereich der Anzeigefläche einzelne Informationen über Fahrzeugsysteme sichtbar sind. Dies ist insbesondere dazu von Vorteil, dass dem Nutzer bei einer Betätigung eines Bedienelements in dem Tiefenmenü eine Rückmeldung des bedienten Fahrzeugsystems oder Dienstes dargestellt werden kann. Mit einer Deckkraft von 100 % werden zumindest die Bedienelemente und/oder Bedienelementzuordnungen dargestellt.

Bei der Ausführungsform nach Fig. 4b wird zum Zeitpunkt tᵥ, an dem die Abwesenheit des Betätigungselements in dem Haltevolumen festgestellt wird, die Deckkraft stufenlos abgesenkt, bis zu einem Zeitpunkt t₃ eine Deckkraft von 0 % erreicht ist. Das Transparenzniveau wird entsprechend von 0 auf 100 % angehoben. Während der Absenkung der Deckkraft wird bei der hier vorgestellten Ausführungsform der neutrale Hintergrund sichtbar. Erst zum Zeitpunkt t₃ wird in den Anzeigemodus umgeschaltet und die entsprechende Ansicht, in der Informationen über ein Fahrzeugsystem oder einen Dienst sichtbar sind, dargestellt.

Die Ausführungsform nach Fig. 5b unterscheidet sich von der nach Fig. 4b dadurch, dass zum Zeitpunkt tᵥ, beim Erfassen der Abwesenheit des Betätigungselements in dem Haltevolumen, die Deckkraft zunächst in einer Stufe abgesenkt wird. Erst zu einem Zeitpunkt t₄ wird mit dem Ausblenden des Tiefenbedienmenüs begonnen, welches erst zum Zeitpunkt t₃ abgeschlossen ist. Anstelle des Absenkens des Transparenzniveaus kann ebenfalls vorgesehen sein, alternativ oder zusätzlich die grafische Darstellung des Tiefenbedienmenüs in der Weise zu ändern, dass ein Nutzer eine deutliche Veränderung wahrnehmen kann, ohne dass der für ihn für eine Bedienung erforderliche Inhalt verändert wird. Beispielsweise kann eine Farbigkeit der Bedienelemente und/oder Bedieneiementzuordnungen verändert werden, eine Hintergrundfarbe verändert werden oder eine zuvor farbige Darstellung in eine Graustufendarstellung umgewandelt werden. Diese Merkmale können ebenfalls im Zusammenhang mit Sofortbedienmenüs, die oben beschrieben worden sind, verwendet werden oder den anderen Tiefenbedienmenüs, die bereits beschrieben wurden oder noch beschrieben werden.

Bei der Ausführungsform nach Fig. 6b wird die Deckkraft bzw. das Transparenzniveau zum Zeitpunkt tᵥ, an dem das Betätigungselement das Haltevolumen verlässt, zunächst nicht verändert. Erst zu einem Zeitpunkt t₆ wird die Deckkraft herabgesetzt. Erst zu einem Zeitpunkt t₄ wird mit dem Ausblenden begonnen, welches erneut zum Zeitpunkt t₃ abgeschlossen ist.

Die einzelnen Ausgestaltungen des zeitlichen Verhaltens der Darstellung des Sofortbedienmenüs der Fig. 4a, 5a und 6a können beliebig mit einer in den Fig. 4b, 5b und 6b dargestellten Ausführungsform für die Darstellung des Tiefenbedienmenüs in Abhängigkeit von der Anwesenheit des Betätigungselements in dem Haltevolumen kombiniert werden. Hierbei ist es jedoch vorzugsweise jeweils so, dass die Zeitspanne, in der die Deckkraft nach einem Verlassen unverändert gelassen wird, die Zeitspanne, in der die Deckkraft abgesenkt, aber konstant gehalten wird, und die Zeitspanne, in der das Ausblenden stattfindet, jeweils für das Tiefenbedienmenü größer gewählt ist als für das Sofortbedienmenü. Einzelne dieser Zeiten können jedoch auch identisch gewählt werden, wobei es jedoch bevorzugt wird, dass die Zeitspanne zwischen dem Verlassen des Haltevolumens und dem Umschalten in den Anzeigemodus bei einem Wechsel aus dem Tiefenmenü in den Anzeigemodus jeweils größer ist als bei einem Wechsel aus dem Sofortbedienmenü in den Anzeigemodus.

In Fig. 7a und 7b sind Ausführungsformen dargestellt, die denen nach Fig. 5a und 5b entsprechen. In Fig. 7a und 7b wird das Betätigungselement jedoch zu einem Zeitpunkt t_{EA} erneut in das Haltevolumen (oder in das Aktivierungsvolumen) bewegt, bevor seit dem Erfassen der Abwesenheit in dem Haltevolumen zum Zeitpunkt tᵥ das erste Zeitintervall, Δt₁=t₁-tᵥ, oder das dritte Zeitintervall, Δt₃=t₃-tᵥ, vergangen sind. Zu erkennen ist, das zu dem Zeitpunkt t_{EA}, an dem die erneute Anwesenheit erfasst wird, die Darstellung des entsprechenden Sofortmenüs (Fig. 7a) und des entsprechenden Tiefenmenüs (Fig. 7b) wieder so erfolgt, wie sie vor dem Erfassen des Verlassens des Haltevolumens zum Zeitpunkt tᵥ dargestellt wurden.

Anzumerken ist, dass eine Darstellung der Bedienmenüs mit einem Transparenzniveau von 100 % oder einer Deckkraft von 0 % nur zur Veranschaulichung erfolgt. Während der Zeitspannen, in denen das Transparenzniveau 100 % oder die Deckkraft von 0 % aufweisen, wird die Anzeige- und Bedienvorrichtung im Anzeigemodus betrieben und somit eigentlich kein Bedienmenü dargestellt.

Bei den dargestellten Ausführungsformen wird jeweils davon ausgegangen, dass ein Wechsel aus dem Bedienmodus in den Anzeigemodus durch ein Entfernen des Betätigungselements aus dem Haltevolumen herbeigeführt wird. Ebenso ist es möglich, in den einzelnen Bedienmenüs ein Bedienelement vorzusehen, welches eine unmittelbare Rückkehr in den Anzeigemodus bewirkt. In den Tiefenmenüs ist es darüber hinaus möglich, ein Bedienelement vorzusehen, mit dem ein Wechsel in ein Sofortbedienmenü bewirkt wird. Dieses kann ein Rücksprung in das Sofortbedienmenü sein, aus dem das Tiefenmenü angewählt wurde, oder ein anderes Sofortbedienmenü sein, das zu dem Bedienkontext korrespondiert, der durch Bedienhandlungen in dem Tiefenmenü oder in einem zuvor angezeigten Tiefenmenü ausgewählt wurde.

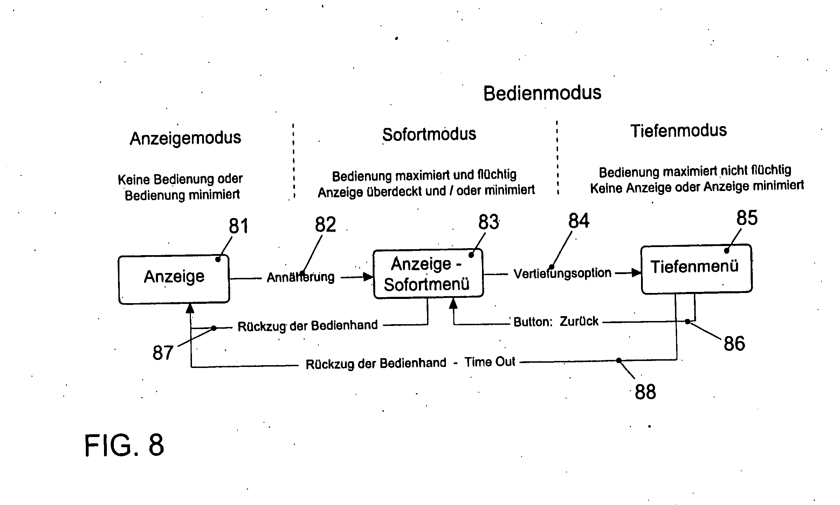

In Fig. 8 ist eine Ausführungsform, die zu Fig. 4a und 4b korrespondiert, noch einmal schematisch in anderer Weise dargestellt. Über Pfeile ist angedeutet, wie zwischen dem Anzeigemodus und dem Bedienmodus und seinen unterschiedlichen Menüs gewechselt werden kann. Aus dem Anzeigemodus 81 gelangt man durch eine Annäherung 82 in den Bedienmodus, in dem ein Sofortmenü 83 angezeigt wird, das der Anzeige aus dem Anzeigemodus überblendet ist. Durch Anwählen einer Vertiefungsoption 84 kann man von dem Sofortbedienmenü 83 in ein Tiefenmenü 85 gelangen. Aus dem Tiefenmenü kann man durch Betätigen eines als Rücksprungtaste ausgebildeten Bedienelements in das Sofortmenü 83 zurückkehren 86. Entfernt man, während die Anzeige und Bedienvorrichtung im Sofortmodus betrieben wird und ein Sofortmenü 83 anzeigt, das Betätigungselement aus dem Haltevolumen 87, so gelangt man unmittelbar zurück in den Anzeigemodus 81. Ist man hingegen im Tiefenmodus, in dem das Tiefenmenü 85 dargestellt ist, und zieht seine Hand zurück 88, so folgt ein Umschalten in den Anzeigemodus 81 erst, nachdem eine vorbestimmte Zeit abgelaufen ist.

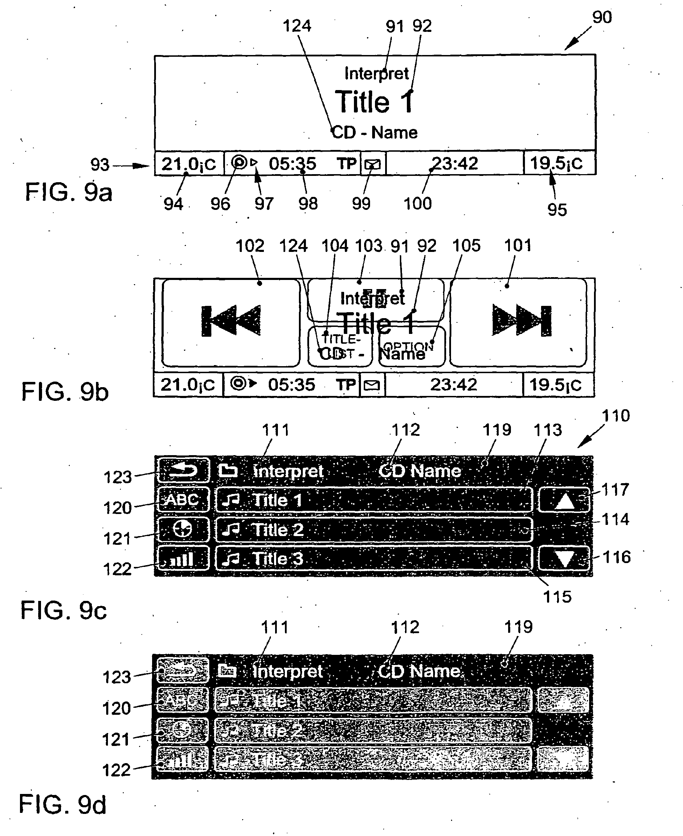

In den Fig. 9a bis 9d sind unterschiedliche Ansichten einer Anzeigefläche dargestellt. In Fig. 9a ist die Ansicht der Anzeigefläche im Anzeigemodus dargestellt. In einem oberen Bereich der Anzeigefläche werden Informationen über einen Multimediaplayer wiedergegeben. Angezeigt sind ein Interpret 91 und ein Titel "Titel 1" 92 sowie ein CD-Name 124. In einem unteren Bereich 93 der Anzeigefläche 90 sind unterschiedliche Statusinformationen angezeigt. Am linken Rand 94 und rechten Rand 95 des unteren Bereichs 93 sind jeweils Klimaanlagevorgabewerte angezeigt. Ein Symbol 96 deutet an, dass der Multimediaplayer eine CD abspielt. Ein Wiedergabesymbol 97 deutet an, dass der angezeigte Titel 92 abgespielt wird. Eine Zeitangabe 98 gibt die Wiedergabezeit des Titels an. In dem unteren Bereich sind ferner ein Symbol für einen Status einer Mailbox 99 und eine Uhrzeitangabe 100 dargestellt.

Wird ein Finger einer Mitte der Anzeigefläche 90 angenähert, so tritt er in ein Aktivierungsvolumen ein und löst das Einblenden eines Sofortbedienmenüs aus, das in Fig. 9b mit einer Deckkraft von etwa 80 % eingeblendet ist. Hierbei werden die Statusinformationen im unteren Bereich 93 nicht überdeckt. Eingeblendet werden Bedienelemente für ein Vorspringen 101, ein Zurückspringen 102, ein Pausieren der Wiedergabe 103 sowie ein Bedienelement zum Wechseln in eine Darstellung einer Titelliste 104 und ein Bedienelement 105 zum Wechseln in ein Optionsmenü. Der lnterpret 91, der wiedergegebene Titel 92 und der CD-Name 124 sind für den Nutzer immer noch wahrnehmbar.

Wird das Bedienelement Titelliste 104 bedient, so gelangt man in ein Tiefenmenü, welches in Fig. 9c dargestellt ist. Der Hintergrund des Tiefenmenüs 110 ist in Fig. 9c neutral. Eingeblendet sind der Name des Interpreten 111 und der Titel der CD 112, die gerade wiedergegeben wird. In einer durchblätterbaren Liste sind die einzelnen Titel der CD dargestellt 113 bis 115. Als Pfeiltasten ausgebildete Bedienelemente 116, 117 können betätigt werden, um durch die Titelliste zu blättern. Die Anzeige der einzelnen angezeigten Titel 113 bis 115 erfolgt ebenfalls in der Form von Bedienelementen. D.h. die Titel 113 bis 115 sind als Bedienelemente ausgebildet. Ein Berühren eines der Bedienelemente 113 bis 115 führt zu einer Auswahl des entsprechenden Titels. An einem linken Rand 119 des Tiefenbedienmenüs 110 sind Bedienelemente 120 bis 122 angeordnet, die eine alphabetische Sortierung, eine Sortierung nach Spieldauer oder eine Sortierung nach einer in der Vergangenheit ermittelten Abspielhäufigkeit ermöglichen. Ein als Rücksprungtaste ausgebildetes Bedienelement 123 ermöglicht die Rückkehr in das Sofortmenü nach Fig. 9b.

In Fig. 9d ist die Ansicht der Anzeigefläche 90 dargestellt, die sich ergibt, nachdem die Bedienhand auf dem Haltevolumen entfernt ist. Zu erkennen ist, dass die Deckkraft der einzelnen Bedienelemente abgenommen hat.

Im Bedienmodus können als Reaktion und zum Liefern einer Rückmeldung Informationen des zu bedienenden Systems oder Dienstes angezeigt werden. Hierdurch wird dem Nutzer eine komplexe Bedienung erleichtert, die beispielsweise mehrere Eingaben erfordert.

Allen beschriebenen Ausführungsformen ist gemein, dass eine Änderung der Darstellung des Sofortbedienmenüs oder Tiefenbedienmenüs, die nach einem Verlassen des Haltevolumens stattgefunden hat, rückgängig gemacht wird, wenn das Betätigungselement im Haltevolumen erneut erfasst wird, bevor der Wechsel in den Anzeigemodus stattgefunden hat. Hierdurch wird es möglich, dass der Nutzer die Bedienung fortsetzt, ohne sich erneut orientieren zu müssen, wenn er das Betätigungselement nur unbeabsichtigt aus dem Haltevolumen entfernt hat.

Das im Zusammenhang mit den unterschiedlichen Ausführungsformen beschriebene Ausblenden der Bedienmenüs kann bei einigen Ausführungsformen nicht nur stetig, sondern auch Stufenweise erfolgen.

Die im Zusammenhang mit den Fig. 1a und 1b beschriebene Ausführungsform stellt lediglich eine bevorzugte Ausführungsform dar. Insbesondere kann zwischen den Verfahrensschritten 35 und 36 auch bei einer Sofortmenüdarstellung nach einem Entfernen des Betätigungselements aus dem Haltevolumen ein fünftes Zeitintervall analog zu der Ausführungsform nach Fig. 6a vorgesehen sein, dessen Verstreichen abgewartet wird, bevor eine Änderung der Darstellung des Sofortmenüs erfolgt. Dieses fünfte Zeitintervall kann kurz gewählt sein und bevorzugt im Bereich von einigen Zehntelsekunden liegen.

Wird das erste Zeitintervall ungleich null gewählt wie beispielsweise in den Ausführungsformen nach Fig. 5a bis 7a, so hat der Nutzer auch bei einem Sofortmenü die Möglichkeit, sich in dem Sofortmenü zu orientieren, auch wenn er das Betätigungselement (seinen Finger) aus dem Haltebereich entfernt hat, um beispielsweise eine bessere Sicht auf die gesamte Anzeigefläche zu erhalten.

Die beschriebenen Prozentsätze für das Transparenzniveau und die Deckkraft sind nur beispielhaft. Als besonders geeignet hat sich auch eine Absenkung, wie sie beispielsweise in Verfahrensschritten 36 und 59 nach Fig. 1a und 1b vorgesehen ist, auf ein Transparenzniveau von 50% erwiesen. Hierbei ist eine deutliche Änderung des Transparenzniveaus beispielsweise gegenüber 80% bei Sofortmenüs oder 100% bei Tiefenmenüs erkennbar. Dennoch ist eine gute Orientierung und Wahrnehmbarkeit der Bedienelemente gewährleistet, so dass eine Bedienung ohne Unterbrechung zuverlässig fortgeführt werden kann, sofern dieses gewünscht ist.

Die beschriebenen Anzeige- und Bedienvorrichtungen sind vorzugsweise als Touchscreen ausgebildet oder umfassen einen solchen. Es sind jedoch auch Ausführungsformen denkbar, die mit einer Projektionsvorrichtung ausgestaltet sind. Eine Erfassung einer Bedienhandlung eines auf die Anzeigefläche projizierten Virtuellen Bedienelements kann beispielsweise mittels der Erfassungseinheit erfolgen oder über in bzw. auf der Projektionsfläche angeordnete Bedienelemente.

Die Erfassungseinheit kann beispielsweise mittels einer Übertragung von Hochfrequenzsignalen über den Nutzer arbeiten, wie dieses beispielsweise in der WO 2004/078536 beschrieben ist. Alternativ können auf Kameras basierende, ultraschallbasierte oder auf optischen Sensoren basierende Sensoreinheiten von der Erfassungseinheit verwendet werden.

Eine solche Sensoreinheit, die ein optisches Verfahren verwendet, kann beispielsweise gemäß folgendem Prinzip ausgestaltet sein. Ein Sende-LED strahlt ein rechteckförmig amplitudenmoduliertes Lichtsignal im optischen oder infraroten Wellenlängenbereich ab. Das an einem Objekt, beispielsweise dem Körperteil, reflektierte Lichtsignal wird von einer Photodiode erfasst. Von einer Kompensations-LED wird ein um 180° phasenversetztes ebenfalls rechteckförmig amplitudenmoduliertes Referenzlichtsignal zu der Photodiode über einen unveränderlichen Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Photodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur- und Helligkeitsschwankungen.

## Patentansprüche

1. Anzeige- und Bedienvorrichtung (2) für ein Kraftfahrzeug (1) zum Bedienen mindestens eines Fahrzeugsystems und/oder mindestens eines Dienstes umfassend eine Anzeigevorrichtung (3) zum Erzeugen einer visuell wahrnehmbaren Darstellung auf einer Anzeigefläche (4) und eine Steuereinheit (8), die ausgestaltet ist, die Anzeigevorrichtung (3) in einem Anzeigemodus und in einem Bedienmodus zu betreiben, wobei in dem Anzeigemodus Informationen über das mindestens ein Fahrzeugsystem (12, 13) oder den mindestens einen Dienst auf der Anzeige Fläche dargestellt sind und in dem Bedienmodus mindestens ein Bedienelement (5) zusätzlich oder zumindest für eine optimale Betätigung verändert dargestellt sind, **dadurch gekennzeichnet, dass** die Anzeigevorrichtung (3) als Touchscreen ausgebildet ist und mit der Steuereinheit (8) mindestens eine ortsauflösenden Erfassungseinheit (19) zum Erfassen einer räumlichen Position eines Betätigungselements relativ zu der Anzeigefläche (4) gekoppelt ist, wobei die Steuereinheit (8) ausgebildet ist, beim Erfassen einer Annäherung des Betätigungselements an die Anzeigefläche (4) von dem Anzeigemodus in den Bedienmodus umzuschalten und wobei nach dem Umschalten von dem Anzeigemodus in den Bedienmodus zunächst ein Sofortmenü dargestellt ist, wobei im Sofortmenü Bedienelemente vorgesehen sind, die kontextabhängig eine Bedienung des jeweiligen Fahrzeugsystems oder Dienstes ermöglichen, über das oder über den im Anzeigemodus Informationen angezeigt wurden, wobei die Darstellung des Sofortmenüs von einer Anwesenheit des Betätigungselements in einem relativ zu der Anzeigefläche (4) festgelegten, im Erfassungsbereich der Erfassungseinheit (19) liegenden Haltevolumen (22) abhängig ist und die Steuereinheit (8) ausgestaltet ist, sofort einen Wechsel aus dem Bedienmodus in den Anzeigemodus vorzunehmen, wenn im Bedienmodus ein Sofortmenü dargestellt ist und eine Abwesenheit des Betätigungselements in dem Haltevolumen (22) erfasst ist, oder zumindest sofort die visuell wahrnehmbare Darstellung des Sofortmenüs abzuändern und einen Wechsel aus dem Bedienmodus in den Anzeigemodus nach einem Ablauf eines ersten Zeitintervalls seit dem Zeitpunkt vorzunehmen, an dem eine Anwesenheit des Betätigungselements in dem Haltevolumen (22) nicht mehr erfasst ist, wenn im Bedienmodus ein Sofortmenü dargestellt ist und die . Abwesenheit des Betätigungselements in dem Haltevolumen (22) erfasst ist, und wobei im Bedienmodus ein Tiefenmenü aktivierbar ist, und ein Wechsel aus dem Bedienmodus in den Anzeigemodus bei einem Erfassen einer Abwesenheit des Betätigungselements in dem Haltevolumen (22) erst nach einem hiernach erfolgten Ablauf eines vorgegebenen dritten Zeitintervalls erfolgt, wenn in dem Bedienmodus ein Tiefenmenü dargestellt ist.

2. Anzeige- und Bedienvorrichtung (2) nach Anspruch 1, **dadurch gekennzeichnet, dass** die Steuereinheit (8) ausgestaltet ist, die visuell wahrnehmbare Darstellung des Tiefenmenüs beim Erfassen der Abwesenheit des Betätigungselements in dem Haltevolumen (22) abzuändern, insbesondere indem eine Helligkeit, eine Einfärbung und/oder ein Transparenzniveau für das mindestens ein Bedienelement (5) oder die mindestens eine Bedienelementzuordnung (7) für das mindestens eine weitere Bedienelement (6), die jeweils zusätzlich im Bedienmodus dargestellt oder zumindest für eine optimale Betätigung verändert grafisch dargestellt sind, verändert wird.

3. Anzeige- und Bedienvorrichtung (2) nach einem der vorangehenden Ansprüche, **dadurch gekennzeichnet, dass** die Steuereinheit (8) ausgestaltet ist, sofort, wenn im Bedienmodus ein Sofortmenü dargestellt ist, und/oder nach Ablauf eines vierten Zeitintervalls, wenn im Bedienmodus ein Tiefenmenü dargestellt ist, ab dem Zeitpunkt, an dem die Abwesenheit des Betätigungselements in dem Haltevolumen (22) erfasst ist, das Transparenzniveau für das mindestens ein Bedienelement (5) und/oder die mindestens eine Bedienelementzuordnung (7) für das mindestens eine weitere Bedienelement (6), die jeweils zusätzlich im Bedienmodus dargestellt oder zumindest für eine optimale Betätigung verändert grafisch dargestellt sind, vorzugsweise stetig, bis zum Ablauf des ersten Zeitintervalls oder entsprechend des dritten Zeitintervalls auf 100% zu erhöhen, wobei das vierte Zeitintervall kürzer als das dritte Zeitintervall ist.

4. Anzeige- und Bedienvorrichtung (2) nach einem der vorangehenden Ansprüche, **dadurch gekennzeichnet; dass** im Bedienmodus zumindest das Sofortmenü überlagert über die Informationen, die im Anzeigemodus dargestellt sind, darstellbar ist, so dass zumindest ein Teil der im Anzeigemodus dargestellten Informationen über das mindestens eine Fahrzeugsystem (12, 13) wahrnehmbar sind.

5. Anzeige- und Bedienvorrichtung (2) nach einem der vorangehenden Ansprüche, **dadurch gekennzeichnet, dass** die im Anzeigemodus sichtbaren Informationen im Bedienmodus verkleinert dargestellt sind.

6. Anzeige- und Bedienvorrichtung (2) nach einem der vorangehenden Ansprüche, **dadurch gekennzeichnet, dass** im Bedienmodus auf der Anzeigefläche (4) eine Information darstellbar ist, die eine Rückmeldung des bedienten mindestens einen Fahrzeugsystems (12, 13) oder eines bedienten weiteren Fahrzeugsystems (12, 13) anzeigt.

7. Anzeige- und Bedienvorrichtung (2) nach einem der vorangehenden Ansprüche, **dadurch gekennzeichnet**, zusätzlich zu dem Haltevolumen (22) ein Aktivierungsvolumen (21) festgelegt ist, wobei das Haltevolumen (22) zumindest einen Teil des Aktivierungsvolumens umfasst und ein Annähern an die Anzeigefläche (4) nur erkannt wird, wenn das Betätigungselement in dem Aktivierungsvolumen (21) erfasst ist.

8. Anzeige- und Bedienvorrichtung (2) nach einem der vorangehenden Ansprüche, **dadurch gekennzeichnet, dass** die mit dem Erfassen der Abwesenheit des Betätigungselements in dem Haltevolumen (22) und/oder hiernach vorgenommenen Änderungen an der grafischen Darstellung des Sofortmenüs und/oder Tiefenmenüs rückgängig gemacht werden, wenn das Betätigurtgselement erneut in dem Haltevolumen (22) oder dem Aktivierungsvolumen (21) erfasst wird, bevor das erste oder entsprechend das dritte Zeitintervall seit dem Erfassen der Abwesenheit abgelaufen ist.

9. Verfahren zum Betreiben einer Anzeige- und Bedienvorrichtung (2) für ein Kraftfahrzeug (1) für eine Bedienung mindestens eines Fahrzeugsystems und/oder mindestens eines Dienstes, die in einem Anzeigemodus und einem Bedienmodus betreibbar ist, umfassend die Schritte: Anzeigen von Informationen über mindestens ein Fahrzeugsystem (12, 13) oder über den mindestens einen Dienst auf einer Anzeigefläche (4) im Anzeigemodus; und Darstellen von mindestens einem Bedienelement (5) oder mindestens einer edienelementzuordnung (7) für mindestens ein weiteres Bedienelement (6), wobei das mindestens eine Bedienelement (5) oder die mindestens eine Bedienelementzuordnung (7) zusätzlich oder zumindest für eine optimale Betätigung veränderte gegenüber dem Anzeigemodus dargestellt werden, **dadurch gekennzeichnet, dass** die Anzeigevorrichtung als Touchscreen ausgebildet ist und mittels mindestens einer ortsauflösenden Erfassungseinheit (19) eine räumliche Position eines Betätigungselements relativ zu der Anzeigefläche (4) erfasst wird und beim Erfassen einer Annäherung des Betätigungselements an die Anzeigefläche (4) von dem Anzeigemodus in den Bedienmodus umgeschaltet wird, wobei nach dem Umschalten von dem Anzeigemodus in den Bedienmodus zunächst ein Sofortmenü dargestellt wird, wobei im Sofortmenü Bedienelemente vorgesehen sind, die kontextabhängig eine Bedienung des jeweiligen Fahrzeugsystems oder Dienstes ermöglichen, über das oder über den im Anzeigemodus Informationen angezeigt wurden und wobei die Darstellung des Sofortmenüs von einer Anwesenheit des Betätigungselements in einem relativ zu der Anzeigefläche (4) festgelegten, im Erfassungsbereich der Erfassungseinheit (19) liegenden Haltevolumen (22) abhängig ist und entweder bei einem Erfassen einer Abwesenheit des Betätigungselements in dem Haltevolumen (22), wenn im Bedienmodus ein Sofortmenü dargestellt wird, sofort aus dem Bedienmodus in den Anzeigemodus gewechselt wird oder alternativ zunächst zumindest eine Darstellung des Sofortmenüs sofort geändert wird, sobald eine Abwesenheit des Betätigungselements in dem Haltevolumen erfasst ist, und bei einem Erfassen der Abwesenheit des Betätigungselements in dem Haltevolumen (22) eine Zeitmessung gestartet wird und aus dem Bedienmodus in den Anzeigemodus dann gewechselt wird, wenn anhand der Zeitmessung ein Ablauf eines ersten Zeitintervalls festgestellt wird, wobei im Bedienmodus ein Tiefenmenü aktivierbar ist, und ein Wechsel aus dem Bedienmodus in den Anzeigemodus bei einem Erfassen einer Abwesenheit des Betätigungselements in dem Haltevolumen (22) erst nach einem hiernach erfolgten Ablauf eines vorgegebenen dritten Zeitintervalls vorgenommen wird, wenn in dem Bedienmodus ein Tiefenmenü dargestellt wird.

10. Verfahren nach Anspruch 9, **dadurch gekennzeichnet, dass** die visuell wahrnehmbare Darstellung des Tiefenmenüs beim Erfassen der Abwesenheit des Betätigungselements in dem Haltevolumen (22) abgeändert wird, insbesondere indem eine Helligkeit, eine Einfärbung und/oder ein Transparenzniveau für das mindestens ein Bedienelement (5) oder die mindestens eine Bedienelementzuordnung (7) für das mindestens eine weitere Bedienelement (6), die jeweils zusätzlich im Bedienmodus dargestellt oder zumindest für eine optimale Betätigung verändert grafisch dargestellt sind, verändert werden.

11. Verfahren nach einem der Ansprüche 9 oder 10, **dadurch gekennzeichnet, dass** sofort, wenn im Bedienmodus ein Sofortmenü dargestellt ist, und/oder nach Ablauf eines vierten Zeitintervalls, wenn im Bedienmodus ein Tiefenmenü dargestellt ist, ab dem Zeitpunkt, an dem die Abwesenheit des Betätigungselements in dem Haltevolumen (22) erfasst wird, das Transparenzniveau für das mindestens ein Bedienelement (5) und/oder die mindestens eine Bedienelementzuordnung (7) für das mindestens eine weitere Bedienelement (6), die jeweils zusätzlich im Bedienmodus dargestellt oder zumindest für eine optimale Betätigung verändert grafisch dargestellt sind, vorzugsweise stetig, bis zum Ablauf des ersten Zeitintervalls oder entsprechend des dritten Zeitintervalls auf 100% erhöht wird, wobei das vierte Zeitintervall kürzer als das dritte Zeitintervall ist.

12. Verfahren nach einem der Ansprüche 9 bis 11, **dadurch gekennzeichnet, dass** im Bedienmodus zumindest das Sofortmenü überlagert über die Informationen, die im Anzeigemodus dargestellt sind, dargestellt wird, so dass zumindest ein Teil der im Anzeigemodus dargestellten Informationen über das mindestens eine Fahrzeugsystem (12, 13) wahrnehmbar sind.

13. Verfahren nach einem der Ansprüche 9 bis 12, **dadurch gekennzeichnet, dass** die im Anzeigemodus sichtbaren Informationen im Bedienmoduls verkleinert dargestellt werden.

14. Verfahren nach einem der Ansprüche 9 bis 13, **dadurch gekennzeichnet, dass** im Bedienmodus auf der Anzeigefläche (4) eine Information darstellt wird, die eine Rückmeldung des bedienten mindestens einen Fahrzeugsystems (12, 13) oder eines bedienten weiteren Fahrzeugsystems (12, 13) anzeigt.

15. Verfahren nach einem der Ansprüche 9 bis 14, **dadurch gekennzeichnet, dass** zusätzlich zu dem Haltevolumen (22) ein Aktivierungsvolumen festgelegt ist, wobei das Haltevolumen (22) zumindest einen Teil des Aktivierungsvolumens umfasst und ein Annähern an die Anzeigefläche (4) nur erkannt wird, wenn das Betätigungselement in dem Aktivierungsvolumen erfasst wird.

16. Verfahren nach einem der Ansprüche 9 bis 15, **dadurch gekennzeichnet, dass** die mit dem Erfassen der Abwesenheit des Betätigungselements in dem Haltevolumen (22) vorgenommenen Änderungen an der grafischen Darstellung des Sofortmenüs und/oder des Tiefenmenüs rückgängig gemacht werden, wenn das Betätigungselement erneut in dem Haltevolumen (22) oder dem Aktivierungsvolumen (21) erfasst wird, bevor das erste oder entsprechend das dritte Zeitintervall seit dem Erfassen der Abwesenheit abgelaufen ist.

## Claims

1. Display and operator control apparatus (2) for a motor vehicle (1) for controlling at least one vehicle system and/or at least one service comprising a display apparatus (3) for producing a visually perceptible presentation on a display panel (4) and a control unit (8) which is designed to operate the display apparatus (3) in a display mode and in an operator control mode, wherein the display mode is used to present information about the at least one vehicle system (12, 13) or the at least one service on the display panel, and the operator control mode is used to present at least one operator control element (5) in addition or at least in a form altered for optimum operation, **characterized in that** the display apparatus (3) is in the form of a touchscreen and the control unit (8) has at least one spatially resolving detection unit (19) coupled to it for the purpose of detecting a spatial position for an operating element relative to the display panel (4), wherein the control unit (8) is designed to change over from the display mode to the operator control mode when the operating element is detected to be approaching the display panel (4) and wherein an instant menu is first of all presented following the changeover from the display mode to the operator control mode, wherein the instant menu contains operator control elements which, depending on the context, allow operator control of the respective vehicle system or service about which information has been displayed in the display mode, wherein the presentation of the instant menu is dependent on the operating element being present in a holding volume (22) which has been stipulated relative to the display panel (4) and which is situated in the detection range of the detection unit (19), and the control unit (8) is designed to immediately effect a change from the operator control mode to the display mode if an instant menu is presented in the operator control mode and the operating element is detected to be absent from the holding volume (22), or to at least immediately modify the visually perceptible presentation of the instant menu and to effect a change from the operator control mode to the display mode when a first interval of time has elapsed since the instant at which the operating element is no longer detected to be present in the holding volume (22) if an instant menu is presented in the operator control mode and the operating element is detected to be absent from the holding volume (22), and wherein a depth menu can be activated in the operator control mode, and a change from the operator control mode to the display mode when the operating element is detected to be absent from the holding volume (22) is effected only after a prescribed third interval of time has elapsed thereafter if a depth menu is presented in the operator control mode.

2. Display and operator control apparatus (2) according to Claim 1, **characterized in that** the control unit (8) is designed to modify the visually perceptible presentation of the depth menu when the operating element is detected to be absent from the holding volume (22), in particular by altering a brightness, a colouring and/or a transparency level for the at least one operator control element (5) or the at least one operator control element association (7) for the at least one further operator control element (6), each of which are presented in addition in the operator control mode or are presented graphically at least in a form altered for optimum operation.

3. Display and operator control apparatus (2) according to one of the preceding claims, **characterized in that** the control unit (8) is designed to increase to 100% the transparency level for the at least one operator control element (5) and/or the at least one operator control element association (7) for the at least one further operator control element (6), each of which is presented in addition in the operator control mode or is presented graphically at least in a form altered for optimum operation, preferably continuously, up until the first interval of time or accordingly the third interval of time has elapsed, immediately, if an instant menu is presented in the operator control mode, and/or after a fourth interval of time has elapsed, if a depth menu is presented in the operator control mode, from the instant at which the operating element is detected to be absent from the holding volume (22), wherein the fourth interval of time is shorter than the third interval of time.

4. Display and operator control apparatus (2) according to one of the preceding claims, **characterized in that** in the operator control mode at least the instant menu can be presented in a manner superimposed over the information which is presented in the display mode, so that at least some of the information presented in the display mode about the at least one vehicle system (12, 13) is perceptible.

5. Display and operator control apparatus (2) according to one of the preceding claims, **characterized in that** the information which is visible in the display mode is presented in reduced form in the operator control mode.

6. Display and operator control apparatus (2) according to one of the preceding claims, **characterized in that** in the operator control mode the display panel (4) can be used to present a piece of information which indicates an acknowledgement from the controlled at least one vehicle system (12, 13) or from a controlled further vehicle system (12, 13).

7. Display and operator control apparatus (2) according to one of the preceding claims, **characterized in that** in addition to the holding volume (22) an activation volume (21) is stipulated, wherein the holding volume (22) comprises at least some of the activation volume and an approach to the display panel (4) is recognized only if the operating element has been detected in the activation volume (21).

8. Display and operator control apparatus (2) according to one of the preceding claims, **characterized in that** the changes to the graphical presentation of the instant menu and/or depth menu which are made when the operating element is detected to be absent from the holding volume (22) and/or thereafter are reversed if the operating element is detected afresh in the holding volume (22) or the activation volume (21) before the first or accordingly the third interval of time has elapsed since the absence was detected.

9. Method for operating a display and operator control apparatus (2) for a motor vehicle (1) for controlling at least one vehicle system and/or at least one service, which apparatus can be operated in a display mode and an operator control mode, comprising the following steps: information about at least one vehicle system (12, 13) or about the at least one service is displayed on a display panel (4) in the display mode; and at least one operator control element (5) or at least one operator control element association (7) for at least one further operator control element (6) is presented, wherein the at least one operator control element (5) or the at least one operator control element association (7) is presented in addition or at least in a form altered, in comparison with the display mode, for optimum operation, **characterized in that** the display apparatus is in the form of a touchscreen and at least one spatially resolving detection unit (19) is used to detect a spatial position for an operating element relative to the display panel (4) and changeover is effected from the display mode to the operator control mode when the operating element is detected to be approaching the display panel (4), wherein an instant menu is first of all presented following the changeover from the display mode to the operator control mode, wherein the instant menu contains operator control elements which, depending on the context, allow operator control of the respective vehicle system or service about which information has been displayed in the display mode and wherein the presentation of the instant menu is dependent on the operating element being present in a holding volume (22) which has been stipulated relative to the display panel (4) and which is situated in the detection range of the detection unit (19), and there is either an immediate change from the operator control mode to the display mode when the operating element is detected to be absent from the holding volume (22), if an instant menu is presented in the operator control mode, or alternatively at least a presentation of the instant menu is first of all immediately changed as soon as the operating element is detected to be absent from the holding volume, and a time measurement is started when the operating element is detected to be absent from the holding volume (22), and there is a change from the operator control mode to the display mode if it is established from the time measurement that a first interval of time has elapsed, wherein a depth menu can be activated in the operator control mode, and a change is effected from the operator control mode to the display mode when the operating element is detected to be absent from the holding volume (22) only after a prescribed third interval of time has elapsed thereafter if a depth menu is presented in the operator control mode.

10. Method according to Claim 9, **characterized in that** the visually perceptible presentation of the depth menu is modified when the operating element is detected to be absent from the holding volume (22), particularly by altering a brightness, a colouring and/or a transparency level for the at least one operator control element (5) or the at least one operator control element association (7) for the at least one further operator control element (6), each of which are presented in addition in the operator control mode or are presented graphically at least in a form altered for optimum operation.

11. Method according to one of Claims 9 and 10, **characterized in that** the transparency level for the at least one operator control element (5) and/or the at least one operator control element association (7) for the at least one further operator control element (6), each of which is presented in addition in the operator control mode or is presented graphically at least in a form altered for optimum operation, is/are increased to 100%, preferably continuously, up until the first interval of time or accordingly the third interval of time has elapsed, immediately, if an instant menu is presented in the operator control mode, and/or after a fourth interval of time has elapsed, if a depth menu is presented in the operator control mode, from the instant at which the operating element is detected to be absent from the holding volume (22), wherein the fourth interval of time is shorter than the third interval of time.

12. Method according to one of Claims 9 to 11, **characterized in that** in the operator control mode at least the instant menu is presented in a manner superimposed over the information which is presented in the display mode, so that at least some of the information presented in the display mode about the at least one vehicle system (12, 13) is perceptible.

13. Method according to one of Claims 9 to 12, **characterized in that** the information which is visible in the display mode is presented in reduced form in the operator control mode.

14. Method according to one of Claims 9 to 13, **characterized in that** in the operator control mode the display panel (4) is used to present a piece of information which indicates an acknowledgement from the controlled at least one vehicle system (12, 13) or from a controlled further vehicle system (12, 13).

15. Method according to one of Claims 9 to 14, **characterized in that** in addition to the holding volume (22) an activation volume is stipulated, wherein the holding volume (22) comprises at least some of the activation volume and an approach to the display panel (4) is recognized only if the operating element is detected in the activation volume.

16. Method according to one of Claims 9 to 15, **characterized in that** the changes to the graphical presentation of the instant menu and/or the depth menu which are made when the operating element is detected to be absent from the holding volume (22) are reversed if the operating element is detected afresh in the holding volume (22) or the activation volume (21) before the first or accordingly the third interval of time has elapsed since the absence was detected.

## Revendications

1. Dispositif d'affichage et de commande (2) pour un véhicule automobile (1) pour la commande d'au moins un système du véhicule et/ou d'au moins un service comportant un dispositif d'affichage (3) pour la génération d'une représentation visuellement perceptible sur une surface d'affichage (4) et une unité de commande (8) constituée pour exploiter le dispositif d'affichage (3) dans un mode d'affichage et dans un mode de commande, dans lequel, en mode d'affichage, des informations concernant au moins un système du véhicule (12, 13) ou au moins un service sont représentées sur la surface d'affichage et, en mode de commande, au moins un élément de commande (5) est représenté en plus, ou au moins modifié pour une manoeuvre optimale, **caractérisé en ce que** le dispositif d'affichage (3) est réalisé sous la forme d'écran tactile et qu'au moins une unité de détection (19) à résolution spatiale pour la détection d'une position spatiale d'un élément de manoeuvre par rapport à la surface d'affichage (4), est accouplée à une unité de commande (8), l'unité de commande (8) étant réalisée pour commuter du mode d'affichage au mode de commande lors de la détection d'une approche de l'élément de manoeuvre de la surface d'affichage (4), et un menu instantané étant d'abord représenté après la commutation du mode d'affichage au mode de commande, des éléments de commande étant prévus dans le menu instantané, permettant une commande contextuelle du système ou du service correspondant du véhicule, par l'intermédiaire duquel des informations ont été affichées en mode d'affichage, la représentation du menu instantané dépendant d'une présence de l'élément de manoeuvre dans un volume de maintien (22) défini par rapport à la surface d'affichage (4), situé dans le périmètre de détection de l'unité de détection (19), et l'unité de commande (8) étant constituée pour entreprendre instantanément un changement du mode de commande au mode d'affichage lorsqu'un menu instantané est représenté en mode de commande et qu'on détecte une absence de l'élément de manoeuvre dans le volume de maintien (22), ou pour au moins modifier instantanément la représentation visuellement perceptible du menu instantané et pour entreprendre un changement du mode de commande au mode d'affichage après une expiration d'un premier délai depuis le moment où une présence de l'élément de manoeuvre dans le volume de maintien (22) n'est plus détectée, lorsqu'un menu instantané est représenté en mode de commande et que l'absence de l'élément de manoeuvre dans le volume de maintien (22) est détectée, et un menu de profondeur étant activable en mode de commande, et un changement du mode de commande au mode d'affichage lors de la détection d'une absence de l'élément de manoeuvre dans le volume de maintien (22) n'étant effectué qu'après l'expiration d'un troisième délai défini supplémentaire, lorsqu'un menu de profondeur est représenté en mode de commande.

2. Dispositif d'affichage et de commande (2) selon la revendication 1, **caractérisé en ce que** l'unité de commande (8) est constituée pour modifier la représentation visuellement perceptible du menu de profondeur lors de la détection de l'absence de l'élément de manoeuvre dans le volume de maintien (22), notamment en modifiant une luminosité, une teinte et/ou un niveau de transparence d'au moins un élément de commande (5) ou d'au moins une liaison d'un élément de commande (7) avec au moins un autre élément de commande (6), représenté de plus respectivement en mode de commande ou au moins représenté modifié graphiquement pour une manoeuvre optimale.

3. Dispositif d'affichage et de commande (2) selon une des revendications précédentes, **caractérisé en ce que**, lorsqu'un menu instantané est représenté en mode de commande, et/ou après l'expiration d'un quatrième délai à partir du moment de la détection de l'absence de l'élément de manoeuvre dans le volume de maintien (22), lorsqu'un menu de profondeur est représenté en mode de commande, l'unité de commande (8), est constituée pour augmenter immédiatement à 100% de préférence en continu, le niveau de transparence d'au moins un élément de commande (5) ou d'au moins une liaison d'un élément de commande (7) avec au moins un autre élément de commande (6), représenté de plus respectivement en mode de commande ou au moins représenté modifié graphiquement pour une manoeuvre optimale, jusqu'à l'expiration du premier délai ou en fonction du troisième délai, le quatrième délai étant plus court que le troisième délai.

4. Dispositif d'affichage et de commande (2) selon une des revendications précédentes, **caractérisé en ce qu'**en mode de commande, au moins le menu instantané peut être superposé aux informations représentées en mode d'affichage de manière à pouvoir percevoir au moins une partie des informations concernant au moins un système du véhicule (12, 13), représentées en mode d'affichage.

5. Dispositif d'affichage et de commande (2) selon une des revendications précédentes, **caractérisé en ce que** les informations visibles en mode d'affichage sont représentées en format réduit en mode de commande.

6. Dispositif d'affichage et de commande (2) selon une des revendications précédentes, **caractérisé en ce qu'**en mode de commande, il est possible de représenter sur la surface d'affichage (4), une information affichant en retour au moins le système du véhicule (12, 13) commandé ou un autre système du véhicule (12, 13) commandé .

7. Dispositif d'affichage et de commande (2) selon une des revendications précédentes, **caractérisé en ce qu'**en plus du volume de maintien (22), on définit un volume d'activation (21), le volume de maintien (22) comportant au moins une partie du volume d'activation et une approche vers la surface d'affichage (4) n'étant reconnue que lorsque l'élément de manoeuvré est détecté dans le volume d'activation (21).

8. Dispositif d'affichage et de commande (2) selon une des revendications précédentes, **caractérisé en ce que** les modifications entreprises sur la représentation graphique des menus instantanés et/ou des menus de profondeur lors de la détection de l'absence de l'élément de manoeuvre dans le volume de maintien (22) ou après cela sont annulées lorsque l'élément de manoeuvre est à nouveau détecté dans le volume de maintien (22) ou dans le volume d'activation (21) avant l'expiration du premier respectivement du troisième délai à partir de la détection de l'absence.

9. Procédé pour la commande d'un dispositif d'affichage et de commande (2) pour un véhicule automobile (1) pour la commande d'au moins un système du véhicule et/ou d'au moins un service pouvant être exploité dans un mode d'affichage et dans un mode de commande, comportant les étapes : affichage d'informations concernant au moins un système du véhicule (12, 13) ou au moins un service sur une surface d'affichage (4) en mode d'affichage ; et représentation d'au moins un élément de commande (5) ou au moins une liaison d'un élément de commande (7) avec au moins un autre élément de commande (6), cet au moins un élément de commande (5) ou cette au moins une liaison d'un élément de commande (7) étant représenté en plus ou au moins modifié par rapport au mode d'affichage pour une manoeuvre optimale, **caractérisé en ce que** le dispositif d'affichage est réalisé sous la forme d'écran tactile et qu'au moyen d'au moins une unité de détection (19) à résolution spatiale, on détecte une position spatiale d'un élément de manoeuvre par rapport à la surface d'affichage (4) et on commute du mode d'affichage au mode de commande lors de la détection d'une approche de l'élément de manoeuvre de la surface d'affichage (4), et un menu instantané étant d'abord représenté après la commutation du mode d'affichage au mode de commande, des éléments de commande étant prévus dans le menu instantané, permettant une commande contextuelle du système ou du service correspondant du véhicule, par l'intermédiaire duquel des informations ont été affichées en mode d'affichage et la représentation du menu instantané dépendant d'une présence de l'élément de manoeuvre dans un volume de maintien (22) défini par rapport à la surface d'affichage (4), situé dans le périmètre de détection de l'unité de détection (19), et entreprend instantanément un changement du mode de commande au mode d'affichage lorsqu'un menu instantané est représenté en mode de commande et qu'on détecte une absence de l'élément de manoeuvre dans le volume de maintien (22), ou en alternative au moins modifie instantanément la représentation du menu instantané dès qu'on détecte une absence de l'élément de manoeuvre dans le volume de maintien, et lors de la détection de l'absence de l'élément de manoeuvre dans le volume de maintien (22), on démarre une mesure de temps et on change alors du mode de commande au mode d'affichage après avoir défini l'expiration d'un premier délai à l'aide de la mesure du temps, un menu de profondeur étant activable en mode de commande, et un changement du mode de commande au mode d'affichage lors de la détection d'une absence de l'élément de manoeuvre dans le volume de maintien (22) n'étant effectuée qu'après l'expiration d'un troisième délai défini supplémentaire, lorsqu'un menu de profondeur est représenté en mode de commande.

10. Procédé selon la revendication 9, **caractérisé en ce que** la représentation visuellement perceptible du menu de profondeur lors de la détection de l'absence de l'élément de manoeuvre dans le volume de maintien (22) est modifiée, notamment en modifiant une luminosité, une teinte et/ou un niveau de transparence d'au moins un élément de commande (5) ou d'au moins une liaison d'un élément de commande (7) avec au moins un autre élément de commande (6), représenté de plus respectivement en mode de commande ou au moins représenté modifié graphiquement pour une manoeuvre optimale.

11. Procédé selon une des revendications 9 ou 10, **caractérisé en ce que**, lorsqu'un menu instantané est représenté en mode de commande, et/ou après l'expiration d'un quatrième délai à partir du moment de la détection de l'absence de l'élément de manoeuvre dans le volume de maintien (22), lorsqu'un menu de profondeur est représenté en mode de commande, le niveau de transparence d'au moins un élément de commande (5) et/ou d'au moins une liaison d'un élément de commande (7) avec au moins un autre élément de commande (6) se trouvant de plus respectivement représenté en mode de commande ou au moins représenté modifié graphiquement pour une manoeuvre optimale, est augmenté à 100% de préférence en continu, jusqu'à l'expiration du premier délai ou en fonction du troisième délai, le quatrième délai étant plus court que le troisième délai.

12. Procédé selon une des revendications 9 à 11, **caractérisé en ce qu'**en mode de commande, au moins le menu instantané peut être superposé aux informations représentées en mode d'affichage de manière à pouvoir percevoir au moins une partie des informations concernant au moins un système du véhicule (12, 13), représentées en mode d'affichage.

13. Procédé selon une des revendications 9 à 12, **caractérisé en ce que** les informations visibles en mode d'affichage sont représentées en format réduit en mode de commande.

14. Procédé selon une des revendications 9 à 13, **caractérisé en ce qu'**en mode de commande, une information est représentée sur la surface d'affichage (4) affichant un retour au moins du système du véhicule (12, 13) commandé ou d'un autre système du véhicule (12, 13) commandé.

15. Procédé selon une des revendications 9 à 14, **caractérisé en ce qu'**en plus du volume de maintien (22), on définit un volume d'activation, le volume de maintien (22) comportant au moins une partie du volume d'activation et une approche vers la surface d'affichage (4) n'étant reconnue que lorsque l'élément de manoeuvre est détecté dans le volume d'activation.

16. Procédé selon une des revendications 9 à 15, **caractérisé en ce que** les modifications entreprises sur la représentation graphique des menus instantanés et/ou des menus de profondeur lors de la détection de l'absence de l'élément de manoeuvre dans le volume de maintien (22) sont annulées lorsque l'élément de manoeuvre est à nouveau détecté dans le volume de maintien (22) ou dans le volume d'activation (21) avant l'expiration du premier respectivement du troisième délai à partir de la détection de l'absence.
